(19) Europäisches Patentamt
European Patent Office
Office européen des brevets

(11) **EP 2 553 263 B1**

(12) **EUROPÄISCHE PATENTSCHRIFT**

(45) Veröffentlichungstag und Bekanntmachung des Hinweises auf die Patenterteilung:
**30.07.2014 Patentblatt 2014/31**

(21) Anmeldenummer: **11706771.0**

(22) Anmeldetag: **09.02.2011**

(51) Int Cl.:
**F03D 7/04** <sup>(2006.01)</sup>

(86) Internationale Anmeldenummer:
**PCT/EP2011/051905**

(87) Internationale Veröffentlichungsnummer:
**WO 2011/120729 (06.10.2011 Gazette 2011/40)**

(54) **KONTROLLEINRICHTUNG FÜR EINE WINDKRAFTANLAGE**

CONTROL DEVICE FOR A WIND POWER PLANT

DISPOSITIF DE COMMANDE POUR ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2010 DE 102010016292**

(43) Veröffentlichungstag der Anmeldung:
**06.02.2013 Patentblatt 2013/06**

(73) Patentinhaber: **SSB Wind Systems GmbH & Co. KG**
**48499 Salzbergen (DE)**

(72) Erfinder:
• **BERTOLOTTI, Fabio**
**48455 Bad Bentheim (DE)**
• **VAN SCHELVE, Jens**
**28195 Bremen (DE)**

(56) Entgegenhaltungen:
**EP-A1- 1 744 058    EP-A1- 2 154 362**
**EP-A2- 2 159 418    WO-A2-2009/153614**
**DE-A1-102006 041 461    DE-A1-102007 058 054**
**GB-A- 2 067 247    US-B1- 6 320 272**

**Beschreibung**

Die Erfindung betrifft eine Kontrolleinrichtung für eine Windkraftanlage mit einem elektrischen System und einem mehrere Rotorblätter umfassenden Rotor, der durch Wind angetrieben wird und eine mechanische Rotorleistung an das elektrische System abgibt, welches diese zumindest zum Teil in eine elektrische Leistung umsetzt, mit einem wenigstens einem der Rotorblätter zugeordneten Blattsensormittel, welches wenigstens eine von zumindest einer Kenngröße eines den Wind am Ort des Rotors beschreibenden Windfelds abhängige physikalische Eigenschaft des wenigstens einen Rotorblatts misst und zumindest ein diese wenigstens eine Eigenschaft charakterisierendes Blattsensorsignal bereitstellt. Ferner betrifft die Erfindung ein Verfahren zum Kontrollieren des Betriebs einer Windkraftanlage.

Die europäische Patentanmeldung Nr. 09013565.8 offenbart ein zur Anwendung in einer einen Rotor mit zwei oder mehr Blättern umfassenden Windkraftanlage vorgesehenes System zur Messung eines Windgeschwindigkeitsfelds, wobei wenigstens ein Sensorsignal durch Messen einer physikalischen Eigenschaft an wenigstens einem der Rotorblätter gewonnen wird, die kennzeichnend für wenigstens eine Kenngröße des Windgeschwindigkeitsfelds ist. Es wird eine Tabelle für mehrere Windbedingungen erstellt, die das wenigstens eine Sensorsignal mit Werten für die wenigstens eine Kenngröße des Windgeschwindigkeitsfelds in Beziehung setzt. Mittels einer Sucheinheit wird aus der Tabelle ein Wert für die wenigstens eine Kenngröße des Windgeschwindigkeitsfelds anhand von für eine aktuelle Windbedingung gegebenen Werten bestimmt, die das wenigstens eine Sensorsignal charakterisieren.

US 6 320 272 offenbart eine Windkraftanlage mit einer Gondel und einem auf der Gondel montierten Laser-Anemometrie-System zur Bestimmung von Windgeschwindigkeiten vor der Windkraftanlage.

Die von einer Windkraftanlage erzeugte elektrische Leistung ist sowohl für den Windkraftanlagenhersteller als auch für den Windkraftanlagenbetreiber von hohem Interesse und finanzieller Bedeutung. Die von einer Windkraftanlage augenblicklich erzeugte Leistung hängt einerseits vom Zustand der maschinellen Anlagenteile, einschließlich der Rotorblätter, des Antriebsstrangs, der elektrischen Komponenten und der Steuerung dieser Anlagenteile sowie andererseits von Kenngrößen des Winds, wie der Windstärke, der Windrichtung relativ zur Rotorausrichtung und der horizontalen und vertikalen Windscherung, im Bereich der von dem Rotor überstrichenen Fläche ab. Diese Kenngrößen sind für den Standort der Windkraftanlage spezifisch und hängen sowohl von dessen geografischer Lage als auch von atmosphärischen Bedingungen ab. Wenn ferner in einem Windpark mehrere Windkraftanlagen eng zusammenstehen, kann zusätzlich eine Windkraftanlage durch ihren Windschatten die elektrische Leistungserzeugung einer anderen Windkraftanlage beeinflussen.

Die erwartete elektrische Leistung, die üblicherweise einen Teil vertraglicher Verpflichtungen zwischen Hersteller und Betreiber bildet, ist in der Regel durch vom Hersteller vorgegebene, allgemeine Bedingungen, wie z.B. der Betrieb der Windkraftanlage auf ebenem Grund bei dauerhaftem Wind, definiert. Zwischen den Parteien können Streitigkeiten auftreten, wenn die tatsächlich erzeugte Leistung nicht mit der erwarteten Leistung übereinstimmt. Somit besteht sowohl für den Hersteller als auch für den Betreiber der Bedarf an einer Methode, die eine genaue und zuverlässige Abschätzung des Betriebszustands der Windkraftanlage ermöglicht, um überprüfen zu können, ob die tatsächliche Leistung der Windkraftanlage mit den Spezifikationen des Herstellers übereinstimmt.

Eine genaue Abschätzung der augenblicklich von der Windkraftanlage erzeugten elektrischen Leistung über deren Lebensdauer böte für den Betreiber zusätzlich den Vorteil, durch Vergleich des Schätzwertes für die elektrische Leistung mit dem gemessenen Wert für die elektrische Leistung Probleme in maschinellen Anlagenteilen der Windkraftanlage zu identifizieren, wenn der Schätzwert und der gemessene Wert über ein vorbestimmtes Maß hinaus voneinander abweichen (der Schätzwert für die elektrische Leistung kann auch als erwartete elektrische Leistung bezeichnet werden).

Zur Zeit ist die Ermittlung eines Schätzwertes für die elektrische Leistung an einem bestimmten Standort weder augenblicklich noch über ein Zeitspanne mit einer ausreichenden Genauigkeit möglich, da die Kenngrößen des Winds in der von dem Rotor überstrichenen Fläche nicht bekannt sind. Die am oberen Ende der Gondel angeordneten Messeinrichtungen, wie Anemometer und Windfahne, sind zu ungenau, da sie den Wind lediglich in einem einzigen Raumpunkt und nicht in der vom Rotor überstrichenen Fläche messen. Ferner treten durch die Gondel und durch von jedem Blatt hervorgerufene Wirbel Verzerrungen im Windfeld auf, wodurch eine genaue Messung behindert wird.

Winddaten höherer Qualität können von einem meteorologischen Mast geliefert werden. Der Abstand zwischen dem Mast und der Windkraftanlage führt jedoch zu unbekannten Abweichungen der Windgeschwindigkeit am Ort des Rotors, wodurch die Berechnung eines genauen Schätzwertes für die elektrische Leistung verhindert wird. Dieser Aspekt wird noch problematischer, wenn lediglich ein einziger oder wenige Masten für einen großen Windpark eingesetzt werden, der bis zu mehrere hundert Windkraftanlagen umfassen kann, die über eine große Fläche verteilt angeordnet sind. Eine Verringerung des Abstands zwischen den Masten und den Windkraftanlagen durch den Einsatz einer großen Anzahl von Masten würde das Problem zwar reduzieren, der dafür erforderliche Aufwand wäre aber zu groß und zu kostenintensiv. Ein weiterer Nachteil besteht darin, dass jeder Mast die Windscherung lediglich in der vertikalen Richtung messen kann, sodass die horizontale Windscherung unbekannt bleibt.

An der Gondel montierte optische Systeme, wie z.B. LIDAR-Systeme (engl.: LIDAR = Light detection and ranging), können zwar durch die Rotorebene hindurch in das einkommende Windfeld hinein messen, die Messung erfolgt jedoch lediglich entlang eines Laserstrahls, sodass der abtastbare Bereich ausgehend von der Messposition auf einen Kegel beschränkt ist, dessen Schnittfläche mit der vom Rotor überstrichenen Fläche lediglich einen Teil derselben darstellt. Somit können die Kenngrößen des Winds nur unzureichend über die von dem Rotor überstrichene Fläche gemessen werden.

Es besteht daher der Wunsch, eine vorzugsweise zu jeder Zeit zur Verfügung stehende Möglichkeit zur Bestimmung eines genauen Schätzwertes für die elektrische Leistung einer Windkraftanlage zu schaffen.

Der Erfindung liegt somit die Aufgabe zugrunde, einen möglichst genauen Schätzwert für die elektrische Leistung einer Windkraftanlage bilden zu können. Vorzugsweise soll auch ein Vergleich dieses Schätzwertes mit der tatsächlichen elektrischen Leistung der Windkraftanlage möglich sein.

Diese Aufgabe wird erfindungsgemäß mit einer Kontrolleinrichtung nach Anspruch 1 und mit einem Verfahren nach Anspruch 9 gelöst. Bevorzugte Weiterbildungen der Erfindung sind in den Unteransprüchen gegeben.

Die erfindungsgemäße Kontrolleinrichtung für eine Windkraftanlage mit einem elektrischen System und einem mehrere Rotorblätter umfassenden Rotor, der durch Wind angetrieben wird und eine mechanische Rotorleistung an das elektrische System abgibt, welches diese zumindest zum Teil in eine elektrische Leistung umsetzt, umfasst - ein wenigstens einem der Rotorblätter zugeordnetes Blattsensormittel, welches wenigstens eine von zumindest einer Kenngröße eines den Wind am Ort des Rotors beschreibenden Windfelds abhängige physikalische Eigenschaft des wenigstens einen Rotorblatts misst und zumindest ein diese wenigstens eine Eigenschaft charakterisierendes Blattsensorsignal bereitstellt, und - eine Estimations-Einheit, die unter Verwendung des zumindest einen Blattsensorsignals einen Schätzwert für die elektrische Leistung bestimmt.

Da die wenigstens eine physikalische Eigenschaft des Rotorblatts abhängig von der zumindest einen Kenngröße des Windfelds ist, wird der Schätzwert für die elektrische Rotorleistung auf Basis von Informationen bestimmt, die direkt aus der von dem Rotor überstrichenen Fläche stammen. Ungenauigkeiten aufgrund eines Abstands zwischen der überstrichenen Fläche und dem Ort der Messung können somit nicht mehr auftreten. Ferner läuft das Rotorblatt in der von dem Rotor überstrichenen Fläche um, sodass eine Vielzahl von Informationen über das Windfeld am Ort der überstrichenen Fläche verfügbar ist. Dies hat zur Folge, dass der Schätzwert für die elektrische Leistung relativ genau ist.

Vorzugsweise werden auch eine oder mehrere Eigenschaften der Windkraftanlage zur Bestimmung des Schätzwertes für die elektrische Leistung berücksichtigt.

Da diese Eigenschaften aber bekannt sind, stellt deren Berücksichtigung keine Schwierigkeiten dar. Solche Eigenschaften können z.B. die aerodynamischen und/oder mechanischen Eigenschaften des Rotors und/oder des wenigstens einen Rotorblatts, die Position des Sensormittels, die mechanischen und/oder dynamischen Eigenschaften des Antriebsstrangs und/oder die elektrischen Eigenschaften des elektrischen Systems umfassen.

Das Windfeld beschreibt Eigenschaften des Winds am Ort des Rotors, insbesondere in oder im Bereich der vom Rotor überstrichenen Fläche. Die Eigenschaften des Winds umfassen insbesondere die Windgeschwindigkeit, die Windrichtung, die horizontale Windscherung und die vertikale Windscherung. Die zumindest eine Kenngröße des Windfelds charakterisiert zumindest eine der Eigenschaften des Winds, insbesondere in Form eines räumlichen Mittelwerts, der auf Basis von Werten für die zumindest eine Eigenschaft des Winds an unterschiedlichen Orten in oder im Bereich der vom Rotor überstrichenen Fläche gebildet wird. Bevorzugt charakterisiert die zumindest eine Kenngröße des Windfelds die Windgeschwindigkeit und/oder die Windrichtung und/oder die horizontale Windscherung und/oder die vertikale Windscherung. Das Windfeld ist oder umfasst z.B. ein Windgeschwindigkeitsfeld.

Gemäß einer Weiterbildung der Erfindung umfasst die Estimations-Einheit einen Windfeld-Estimator, der unter Verwendung des zumindest einen Blattsensorsignals einen Schätzwert für die mechanische Rotorleistung bestimmt, und einen Leistungs-Estimator, der auf Basis des Schätzwertes für die mechanische Rotorleistung den Schätzwert für die elektrische Leistung bestimmt. Vorzugsweise bestimmt der Windfeld-Estimator unter Verwendung des zumindest einen Blattsensorsignals wenigstens einen die zumindest eine Kenngröße des Windfelds charakterisierenden Wert und den Schätzwert für die mechanische Rotorleistung, der bevorzugt auf Basis des wenigstens einen die zumindest eine Kenngröße des Windfelds charakterisierenden Werts bestimmt wird. Gemäß einer Ausgestaltung der Erfindung ist der wenigstens eine die zumindest eine Kenngröße des Windfelds charakterisierende Wert wenigstens ein die zumindest eine Kenngröße des Windfelds charakterisierender Schätzwert.

Die oben beschriebene Vorgehensweise gliedert die Bestimmung des Schätzwertes für die elektrische Leistung insbesondere in mehrere Schritte. In einem ersten der Schritte wird bevorzugt der Schätzwert für die mechanische Rotorleistung bestimmt, und in einem zweiten der Schritte wird bevorzugt auf Basis dieses Schätzwertes der Schätzwert für die elektrische Leistung bestimmt. Dies hat sich aufgrund der Komplexität der Bestimmung des Schätzwertes für die elektrische Leistung als vorteilhaft erwiesen. Da in dem ersten Schritt insbesondere die Umsetzung von Windleistung in die mechanische Rotorleistung und in dem zweiten Schritt insbesondere die Umsetzung der mechanischen Rotorleistung in die elektrische Leistung betrachtet wird, können für die Schritte jeweils geeignete Modellbildungen herangezogen werden. Im ersten Schritt wird bevorzugt unter Verwendung des zumindest einen Blattsensorsignals und/oder der gemessenen wenigstens einen physikalischen Eigenschaft des wenigstens einen Rotorblatts der wenigstens eine die zumindest eine Kenngröße des Windfelds charakterisierende Wert bestimmt. Dies ist vorteilhaft, da dieser wenigstens eine Wert den Wind am Ort des Rotors beschreibt und die mechanische Rotorleistung vom Wind am Ort des Rotors abhängig ist. Somit ist der erste Schritt bevorzugt in mehrere Teilschritte gegliedert. In einem ersten der Teilschritte wird vorzugsweise der Wind am Ort des Rotors beschrieben, und in einem zweiten der Teilschritte wird vorzugsweise in Abhängigkeit vom Wind am Ort des Rotors die mechanische Rotorleistung bestimmt. Bevorzugt wird im ersten Teilschritt unter Verwendung des zumindest einen Blattsensorsignals und/oder der gemessenen wenigstens einen physikalischen Eigenschaft des wenigstens einen Rotorblatts der wenigstens eine die zumindest eine Kenngröße des Windfelds charakterisierende Wert bestimmt, und im zweiten Teilschritt wird bevorzugt, insbesondere in Abhängigkeit von diesem wenigstens einen Wert die mechanische Rotorleistung bestimmt. Somit können für die Teilschritte jeweils geeignete Modellbildungen herangezogen werden. Die hier beschriebene Vorgehensweise ist aber nicht einschränkend zu verstehen, sodass die Bestimmung des Schätzwertes für die elektrische Leistung auch auf anderem Wege erfolgen kann.

Der wenigstens eine die zumindest eine Kenngröße des Windfelds charakterisierende Wert charakterisiert bevorzugt die Windgeschwindigkeit und/oder die Windrichtung und/oder die horizontale Windscherung und/oder die vertikale Windscherung, insbesondere am Ort der von dem Rotor überstrichenen Fläche. Vorzugsweise ist aus dem wenigstens einen die zumindest eine Kenngröße des Windfelds charakterisierenden Wert wenigstens ein Wert oder Schätzwert für die zumindest eine Kenngröße des Windfelds ableitbar. Bevorzugt bildet der wenigstens eine die zumindest eine Kenngröße des Windfelds charakterisierende Wert wenigstens einen Wert oder Schätzwert für die zumindest eine Kenngröße des Windfelds.

Der Windfeld-Estimator berechnet den wenigstens einen die zumindest eine Kenngröße des Windfelds charakterisierenden Wert und/oder den Schätzwert für die mechanische Rotorleistung z.B. unter Anwendung eines oder wenigstens eines Verfahrens zur Systemidentifikation. Gemäß einer Ausgestaltung der Erfindung bestimmt der Windfeld-Estimator den wenigstens einen die zumindest eine Kenngröße des Windfelds charakterisierenden Wert und/oder den Schätzwert für die mechanische Rotorleistung unter Anwendung einer oder wenigstens einer MBC-Transformation (Multi-Blade-Coordinate-Transformation). Beispielsweise kann die wenigstens eine MBC-Transformation eine 1p-MBC-Transformation oder eine 1p-MBC-Transformation und eine 2p-MBC-Transformation umfassen.

Bevorzugt umfasst die Estimations-Einheit eine oder wenigstens eine Windfeld-Tabelle, in der für unterschiedliche Windbedingungen die zumindest eine Kenngröße des Windfelds charakterisierende Werte und Werte zum Abschätzen der mechanischen Rotorleistung hinterlegt sind, wobei die Werte zum Abschätzen der mechanischen Rotorleistung insbesondere mit den die zumindest eine Kenngröße des Windfelds charakterisierenden Werten in Beziehung stehen. Der Windfeld-Estimator bestimmt den Schätzwert für die mechanische Rotorleistung bevorzugt unter Verwendung der Windfeld-Tabelle. Insbesondere ermittelt der Windfeld-Estimator einen in der Windfeld-Tabelle hinterlegten Wert zum Abschätzen der mechanischen Rotorleistung (wenigstens) in Abhängigkeit von dem zumindest einen Blattsensorsignal oder von einem von diesem abgeleiteten Wert oder Wertesatz. Auf Basis des aus der Windfeld-Tabelle ermittelten Werts zum Abschätzen der mechanischen Rotorleistung bildet der Windfeld-Estimator den Schätzwert für die mechanische Rotorleistung. Vorzugsweise entspricht der aus der Windfeld-Tabelle ermittelte Wert bereits dem Schätzwert für die mechanische Rotorleistung. Das Ermitteln des Werts zum Abschätzen der mechanischen Rotorleistung aus der Windfeld-Tabelle erfolgt bevorzugt mittels einer Sucheinheit, die z.B. von dem Windfeld-Estimator umfasst ist. Die Windfeld-Tabelle ist insbesondere in dem Windfeld-Estimator hinterlegt bzw. gespeichert. Die in der Windfeld-Tabelle hinterlegten Werte können z.B. durch Modellbildung berechnet und/oder durch Versuche ermittelt werden. Insbesondere wird die Windfeld-Tabelle vorab erstellt und ist somit vorgegeben, sodass sie von dem Windfeld-Estimator nutzbar ist.

Das Blattsensormittel misst die wenigstens eine physikalische Eigenschaft insbesondere mehrfach nacheinander, vorzugsweise fortlaufend. Bevorzugt bestimmt der Windfeld-Estimator nacheinander mehrere Werte zum Abschätzen der mechanischen Rotorleistung und bildet unter zeitlicher Mittelung oder durch zeitliche Mittelung dieser Werte den Schätzwert für die mechanische Rotorleistung, der somit einen zeitlichen Mittelwert für die geschätzte mechanische Rotorleistung repräsentiert. Die Mittelung erfolgt vorzugsweise über ein vorgewähltes Zeitintervall. Bevorzugt bildet der Schätzwert für die mechanische Rotorleistung einen fortlaufenden Mittelwert.

Der Leistungs-Estimator berechnet den Schätzwert für die elektrische Leistung z.B. unter Anwendung eines oder wenigstens eines Verfahrens zur Systemidentifikation. Bevorzugt umfasst die Estimations-Einheit eine Leistungstabelle, in der für unterschiedliche Betriebsbedingungen der Windkraftanlage von der mechanischen Rotorleistung abhängige Betriebswerte und Leistungswerte zum Abschätzen der elektrischen Leistung hinterlegt sind, wobei die Leistungswerte zum Abschätzen der elektrischen Leistung vorzugsweise mit den von der mechanischen Rotorleistung abhängigen Betriebswerten in Beziehung stehen. Der Leistungs-Estimator bestimmt den Schätzwert für die elektrische Leistung bevorzugt unter Verwendung der Leistungstabelle. Insbesondere ermittelt der Leistungs-Estimator einen in der Leistungstabelle hinterlegten Wert zum Abschätzen der elektrischen Leistung (wenigstens) in Abhängigkeit von dem Schätzwert für die mechanische Rotorleistung. Auf Basis des aus der Leistungstabelle ermittelten Werts zum Abschätzen der elektrischen Leistung bildet der Leistungs-Estimator den Schätzwert für die elektrische Leistung. Vorzugsweise entspricht der aus der Leistungstabelle ermittelte Wert bereits dem Schätzwert für die elektrische Leistung. Die Leistungstabelle ist insbesondere in dem Leistungs-Estimator hinterlegt bzw. gespeichert. Die in der Leistungstabelle hinterlegten Werte können z.B. durch Modellbildung berechnet und/oder durch Versuche ermittelt werden. Insbesondere wird die Leistungstabelle vorab erstellt und ist somit vorgegeben, sodass sie von dem Leistungs-Estimator nutzbar ist.

Bevorzugt umfassen die von der mechanischen Rotorleistung abhängigen Betriebswerte zumindest Werte für die mechanische Rotorleistung. Zusätzlich können diese Betriebswerte aber auch Werte für die Rotordrehzahl und/oder Werte für die Rotorbeschleunigung und/oder Werte für die Umgebungstemperatur und/oder Sollwerte für die elektrische Leistung und/oder andere Werte umfassen. Bevorzugt kennzeichnen die in der Leistungstabelle hinterlegten Werte stationäre Betriebszustände der Windkraftanlage, in denen die Rotordrehzahl jeweils konstant oder im Wesentlichen konstant ist. Bei unterschiedlichen stationären Betriebszuständen können sich die Rotordrehzahlen aber unterscheiden. Ergänzend oder alternativ ist es möglich, dass die oder einige der in der Leistungstabelle hinterlegten Werte wenigstens einen Beschleunigungszustand und/oder wenigstens einen Verzögerungszustand der Windkraftanlage kennzeichnen, wobei die Rotordrehzahl im Beschleunigungszustand steigt und im Verzögerungszustand fällt.

Gemäß einer Weiterbildung der Erfindung bestimmt der Leistungs-Estimator den Schätzwert für die elektrische Leistung zusätzlich auf Basis des wenigstens einen die zumindest eine Kenngröße des Windfelds charakterisierenden Werts. Dies kann z.B. deshalb vorteilhaft sein, da das elektrische System bevorzugt in Abhängigkeit von den Windbedingungen gesteuert oder geregelt wird. Die Windbedingungen können somit die Umsetzung der mechanischen Rotorleistung in die elektrische Leistung beeinflussen.

Die elektrische Leistung wird vorzugsweise in Abhängigkeit von wenigstens einem Sollwert für die elektrische Leistung geregelt, insbesondere mittels einer Steuereinheit. Bevorzugt ist eine Meldeeinheit vorgesehen, die den wenigstens einen Sollwert für die elektrische Leistung abfragen und der Estimations-Einheit und/oder dem Leistungs-Estimator zur Verfügung stellen kann. Die Meldeeinheit fragt den wenigstens einen Sollwert vorzugsweise von der Steuereinheit ab. Insbesondere umfasst der wenigstens eine Sollwert einen Sollwert für die elektrische Wirkleistung und/oder einen Sollwert für die elektrische Blindleistung. Bevorzugt bestimmt die Estimations-Einheit und/oder der Leistungs-Estimator den Schätzwert für die elektrische Leistung zusätzlich auf Basis des wenigstens einen Sollwerts für die elektrische Leistung. Dies ist z.B. deshalb vorteilhaft, da die Umsetzung der mechanischen Rotorleistung in die elektrische Leistung bevorzugt durch den wenigstens einen Sollwert beeinflusst wird. Die Steuereinheit, in der insbesondere der wenigstens eine Sollwert gespeichert ist, ist vorzugsweise durch die Hauptsteuerung (allgemeine Anlagensteuerung) der Windkraftanlage oder durch einen Teil dieser Steuerung gebildet.

Gemäß einer Ausgestaltung der Erfindung ist ein Luftsensormittel vorgesehen, welches wenigstens eine physikalische Eigenschaft der Luft am Ort der Windkraftanlage misst und zumindest ein diese wenigstens eine physikalische Eigenschaft der Luft charakterisierendes Luftsensorsignal bereitstellt. Vorzugsweise wird die physikalische Eigenschaft der Luft am Ort des Rotors gemessen. Insbesondere bestimmt der Windfeld-Estimator den wenigstens einen die zumindest eine Kenngröße des Windfelds charakterisierenden Wert und/oder den Schätzwert für die mechanische Rotorleistung zusätzlich unter Verwendung des zumindest einen Luftsensorsignals, sodass die Werte hinsichtlich ihrer Genauigkeit verbessert werden können. Das Luftsensormittel weist bevorzugt einen die Luftdichte messenden Luftdichtesensor und/oder einen die Lufttemperatur messenden Temperatursensor auf, sodass die wenigstens eine physikalische Eigenschaft der Luft die Luftdichte und/oder die Lufttemperatur umfasst.

Gemäß einer Ausgestaltung der Erfindung ist ein Rotorsensormittel vorgesehen, mittels welchem wenigstens eine physikalische Eigenschaft des Rotors gemessen und zumindest ein diese wenigstens eine Eigenschaft des Rotors charakterisierendes Rotorsensorsignal bereitgestellt wird. Die wenigstens eine physikalische Eigenschaft des Rotors umfasst bevorzugt den Rotorwinkel und/oder die Rotationsgeschwindigkeit des Rotors (Rotorgeschwindigkeit) und/oder den Blattwinkel des wenigstens einen Rotorblatts und/oder die Rotorbeschleunigung.

Der Betriebszustand der Windkraftanlage ist bevorzugt durch wenigstens eine Betriebszustandsgröße gekennzeichnet, welche die wenigstens eine physikalische Eigenschaft der Luft und/oder die wenigstens eine physikalische Eigenschaft des Rotors umfasst. Die wenigstens eine Betriebszustandsgröße wird bevorzugt mittels des Luftsensormittels und/oder mittels des Rotorsensormittels gemessen. Vorzugsweise ist die wenigstens eine Betriebszustandsgröße durch zumindest ein Betriebszustandsgrößensignal charakterisiert, welches insbesondere das zumindest eine Luftsensorsignal und/oder das zumindest eine Rotorsensorsignal umfasst.

Gemäß einer Weiterbildung der Erfindung sind in der Windfeld-Tabelle zusätzlich für unterschiedliche Betriebszustände der Windkraftanlage Werte für die wenigstens eine Betriebszustandsgröße hinterlegt, wobei die Werte zum Abschätzen der mechanischen Rotorleistung vorzugsweise zusätzlich mit den Werten für die wenigstens eine Betriebszustandsgröße in Beziehung stehen. Insbesondere ermittelt der Windfeld-Estimator einen in der Windfeld-Tabelle hinterlegten Wert zum Abschätzen der mechanischen Rotorleistung unter Verwendung des zumindest einen Blattsensorsignals und des zumindest einen Betriebszustandsgrößensignals. Bevorzugt wird der Wert zum Abschätzen der mechanischen Rotorleistung mittels der Sucheinheit ermittelt.

Das Blattsensormittel ist bevorzugt am Rotor angeordnet. Insbesondere ist das Blattsensormittel an dem wenigstens einen Rotorblatt und/oder an einer Rotornabe des Rotors angeordnet, mit welcher die Rotorblätter verbunden sind.

Die wenigstens eine physikalische Eigenschaft des wenigstens einen Rotorblatts ist oder umfasst bevorzugt wenigstens eine mechanische Eigenschaft des wenigstens einen Rotorblatts. Insbesondere ist oder umfasst diese wenigstens eine Eigenschaft zumindest eine Verformung des wenigstens einen Rotorblatts, die bevorzugt eine oder wenigstens eine elastische Verformung ist.

Gemäß einer Weiterbildung der Erfindung umfasst das Blattsensormittel wenigstens einen eine Dehnung des wenigstens einen Rotorblatts messenden Dehnungssensor und/oder wenigstens einen eine Torsion des wenigstens einen Rotorblatts messenden Torsionssensor und/oder wenigstens einen eine Biegung des wenigstens einen Rotorblatts messenden Biegungssensor. Insbesondere sind der Dehnungssensor und/oder der Torsionssensor und/oder der Biegungssensor jeweils an zumindest einer vorbestimmten Position des wenigstens einen Rotorblatts oder der Rotornabe angeordnet. Die wenigstens eine physikalische Eigenschaft des wenigstens einen Rotorblatts umfasst somit eine Dehnung und/oder eine Torsion und/oder eine Biegung des wenigstens einen Rotorblatts, insbesondere an der oder den zumindest einen vorbestimmten Positionen.

Gemäß einer Ausgestaltung der Erfindung ist ein Messmittel für elektrische Leistung vorgesehen, mittels welchem ein aktueller Wert der elektrischen Leistung gemessen wird. Somit können sowohl der Schätzwert für die elektrische Leistung als auch der aktuelle Wert der elektrischen Leistung zu Zwecken der Auswertung zur Verfügung gestellt werden. Insbesondere ist ein Datenerfassungssystem vorgesehen, welches den Schätzwert für die elektrische Leistung und den aktuellen Wert der elektrischen Leistung entgegennimmt. Vorzugsweise werden diese Werte von dem Datenerfassungssystem gesammelt und/oder zumindest vorübergehend in diesem gespeichert. Bevorzugt berechnet das Datenerfassungssystem die Differenz zwischen und/oder den Quotient aus dem Schätzwert für die elektrische Leistung und dem aktuellen Wert der elektrischen Leistung. Die Berechnung dieser Differenz und/oder dieses Quotienten kann aber auch an anderer Stelle oder extern erfolgen. Das Datenerfassungssystem kann z.B. auch als Datenerfassungseinheit bezeichnet werden.

Gemäß einer Weiterbildung der Erfindung ist ein Messmittel für mechanische Leistung vorgesehen, mittels welchem ein aktueller Wert der mechanischen Rotorleistung gemessen wird. Somit können sowohl der Schätzwert für die mechanische Rotorleistung als auch der aktuelle Wert der mechanischen Rotorleistung zu Zwecken der Auswertung zur Verfügung gestellt werden. Insbesondere werden der aktuelle Wert der mechanischen Rotorleistung und der Schätzwert für die mechanische Rotorleistung von dem Datenerfassungssystem entgegengenommen. Vorzugsweise werden diese Werte von dem Datenerfassungssystem gesammelt und/oder zumindest vorübergehend in diesem gespeichert. Bevorzugt berechnet das Datenerfassungssystem die Differenz zwischen und/oder den Quotient aus dem Schätzwert für die mechanische Rotorleistung und dem aktuellen Wert der mechanischen Rotorleistung. Die Berechnung dieser Differenz und/oder dieses Quotienten kann aber auch an anderer Stelle oder extern erfolgen. Das Messmittel für mechanische Leistung und das Messmittel für elektrische Leistung können auch in einem Messmittel zusammengefasst sein.

Das Datenerfassungssystem ist vorzugsweise mit der Hauptsteuerung der Windkraftanlage verknüpft. Insbesondere ist das Datenerfassungssystem durch die Hauptsteuerung oder durch einen Teil derselben gebildet. Gemäß einer Weiterbildung der Erfindung ist ein SCADA-System (engl.: SCADA = Supervisory Control and Data Acquisition) vorgesehen, mittels welchem insbesondere den Betriebszustand der Windkraftanlage kennzeichnende Informationen zu einem oder mehreren datenverarbeitenden Systemen übertragen werden können, die vorzugsweise extern von der Windkraftanlage vorgesehen sind. Das oder die datenverarbeitenden Systeme sind bevorzugt mit der Windkraftanlage, insbesondere mit dem SCADA-System und/oder der Hauptsteuerung gekoppelt. Vorzugsweise ist das SCADA-System durch die Hauptsteuerung oder durch einen Teil derselben gebildet. Das Datenerfassungssystem ist bevorzugt mit dem SCADA-System verknüpft oder von diesem umfasst. Somit kann das Datenerfassungssystem auch als SCADA-Einheit bezeichnet werden. Gemäß einer Weiterbildung der Erfindung umfasst das SCADA-System eine zentrale Recheneinheit, die z.B. über

ein lokales Netzwerk mit einer Schnittstelle der Windkraftanlage, einem meteorologischen Messsystem und/oder einer Netzübergabe-Einrichtung verbunden ist. Die Kontrolleinrichtung und/oder die Estimations-Einheit und/oder der Windfeld-Estimator und/oder der Leistungs-Estimator sind somit in die allgemeine Zustandsüberwachung (engl. condition monitoring) der Windkraftanlage integrierbar. Ein SCADA-System ist z.B. aus der DE 10 2007 026 176 A1 bekannt.

Die Erfindung betrifft ferner eine Windkraftanlage mit

- einem elektrischen System und einem mehrere Rotorblätter umfassenden Rotor, der durch Wind angetrieben wird und eine mechanische Rotorleistung an das elektrische System abgibt, welches diese zumindest zum Teil in eine elektrische Leistung umsetzt, und
- einer erfindungsgemäßen Kontrolleinrichtung. Die Windkraftanlage kann gemäß allen im Zusammenhang mit der erfindungsgemäßen Kontrolleinrichtung beschriebenen Ausgestaltungen weitergebildet sein. Insbesondere umfasst die Windkraftanlage eine Hauptsteuerung, mittels welcher der Betrieb der Windkraftanlage steuerbar ist. Die Kontrolleinrichtung ist vorzugsweise ganz oder teilweise in die Hauptsteuerung integriert.

Der Rotor wird durch den Wind um eine Rotorachse gedreht. Insbesondere ist der Rotor um die Rotorachse drehbar an einem Maschinenträger der Windkraftanlage gelagert. Der Maschinenträger ist vorzugsweise fest mit einer Gondel verbunden und/oder bildet diese oder einen Teil derselben. Insbesondere ist der Maschinenträger am oberen Ende eines Turms angeordnet.

Gemäß einer Weiterbildung der Erfindung ist der Rotor und/oder der Maschinenträger um eine Gierachse drehbar, die vorzugsweise quer oder im Wesentlichen zur Rotorachse verläuft. Bevorzugt verläuft die Gierachse in oder im Wesentlichen in vertikaler Richtung. Die Verdrehung des Rotors und/oder des Maschinenträgers um die Gierachse wird durch einen Gierwinkel beschrieben, von dem insbesondere die Ausrichtung der Rotorachse zur Windrichtung abhängig ist. Vorzugsweise ist der Maschinenträger um die Gierachse drehbar am Turm gelagert.

Der Rotor umfasst bevorzugt zwei oder mehr, insbesondere drei oder wenigstens drei Rotorblätter, die sich jeweils entlang einer Blattachse erstrecken. Die Blattachsen verlaufen vorzugsweise quer oder im Wesentlichen quer zur Rotorachse. Ferner umfasst der Rotor bevorzugt eine Rotornabe, an der die Rotorblätter befestigt sind. Insbesondere sind die Rotorblätter jeweils mittels eines Blattlagers um ihre jeweilige Blattachse drehbar an der Rotornabe gelagert. Bevorzugt ist für jedes Rotorblatt ein Blattwinkelverstellantrieb vorgesehen, mittels welchem das jeweilige Rotorblatt um seine Blattachse drehbar ist. Die Verdrehung der Rotorblätter um ihre Blattachsen wird jeweils durch einen Blattwinkel beschrieben, von dem insbesondere der Anstellwinkel des jeweiligen Rotorblatts zum Wind abhängig ist.

Das elektrische System umfasst bevorzugt wenigstens einen elektrischen Generator, der mechanisch mit dem Rotor gekoppelt ist und durch diesen angetrieben wird. Der Rotor ist, insbesondere mittels seiner Rotornabe drehfest mit einer Rotorwelle verbunden, mittels welcher der Rotor mit dem elektrischen System, insbesondere mit dem wenigstens einen Generator mechanisch gekoppelt ist. Diese Kopplung kann unter Zwischenschaltung eines oder mehrerer Getriebe erfolgen. Das elektrische System ist bevorzugt mit einem elektrischen Netz gekoppelt, welches vorzugsweise ein externes Netz ist. Insbesondere kann das elektrische System die elektrische Leistung in das Netz abgeben.

Die Erfindung betrifft ferner ein Verfahren zum Kontrollieren des Betriebs einer Windkraftanlage, die ein elektrisches System und einen mehrere Rotorblätter umfassenden Rotor aufweist, der durch Wind angetrieben wird und eine mechanische Rotorleistung an das elektrische System abgibt, welches diese zumindest zum Teil in eine elektrische Leistung umsetzt, wobei wenigstens eine von zumindest einer Kenngröße eines den Wind am Ort des Rotors beschreibenden Windfelds abhängige physikalische Eigenschaft von wenigstens einem der Rotorblätter gemessen wird, und wobei unter Verwendung der gemessenen wenigstens einen physikalischen Eigenschaft ein Schätzwert für die elektrische Leistung bestimmt wird. Das erfindungsgemäße Verfahren wird bevorzugt mit der erfindungsgemäßen Kontrolleinrichtung und/oder mit der erfindungsgemäßen Windkraftanlage durchgeführt und kann gemäß allen in diesem Zusammenhang beschriebenen Ausgestaltungen weitergebildet sein.

Gemäß einer Weiterbildung der Erfindung wird unter Verwendung der gemessenen wenigstens einen physikalischen Eigenschaft ein Schätzwert für die mechanische Rotorleistung bestimmt. Ferner wird auf Basis des Schätzwertes für die mechanische Rotorleistung insbesondere der Schätzwert für die elektrische Leistung bestimmt. Bevorzugt werden unter Verwendung der gemessenen wenigstens einen physikalischen Eigenschaft wenigstens ein die zumindest eine Kenngröße des Windfelds charakterisierender Wert und der Schätzwert für die mechanische Rotorleistung bestimmt, der vorzugsweise auf Basis des wenigstens einen die zumindest eine Kenngröße des Windfelds charakterisierenden Werts bestimmt wird. Gemäß einer Ausgestaltung der Erfindung ist der wenigstens eine die zumindest eine Kenngröße des Windfelds charakterisierende Wert wenigstens ein die zumindest eine Kenngröße des Windfelds charakterisierender Schätzwert.

Die Bestimmung des wenigstens einen die zumindest eine Kenngröße des Windfelds charakterisierenden Werts und/oder des Schätzwerts für die mechanische Rotorleistung erfolgt z.B. unter Anwendung eines oder wenigstens eines Verfahrens zur Systemidentifikation. Gemäß einer Ausgestaltung der Erfindung wird der wenigstens eine die zumindest eine Kenngröße des Windfelds charakterisierende Wert und/oder der Schätzwert für die mechanische Rotorleistung unter Anwendung einer oder wenigstens einer MBC-Transformation (Multi-Blade-Coordinate-Transformation) bestimmt. Beispielsweise kann die wenigstens eine MBC-Transformation eine 1p-MBC-Transformation oder eine 1p-MBC-Transformation und eine 2p-MBC-Transformation umfassen.

Bevorzugt sind oder werden für unterschiedliche Windbedingungen die zumindest eine Kenngröße des Windfelds charakterisierende Werte und Werte zum Abschätzen der mechanischen Rotorleistung in einer Windfeld-Tabelle hinterlegt, wobei die Werte zum Abschätzen der mechanischen Rotorleistung insbesondere mit den die zumindest eine Kenngröße des Windfelds charakterisierenden Werten in Beziehung stehen. Der Schätzwert für die mechanische Rotorleistung wird vorzugsweise unter Verwendung der Windfeld-Tabelle bestimmt. Bevorzugt wird ein in der Windfeld-Tabelle hinterlegter Wert zum Abschätzen der mechanischen Rotorleistung unter Verwendung der gemessenen wenigstens einen physikalischen Eigenschaft ermittelt. Die in der Windfeld-Tabelle hinterlegten Werte können z.B. durch Modellbildung berechnet und/oder durch Versuche ermittelt werden.

Die wenigstens eine physikalische Eigenschaft wird insbesondere mehrfach nacheinander, vorzugsweise fortlaufend gemessen. Bevorzugt werden nacheinander mehrere Werte zur Abschätzung der mechanischen Rotorleistung bestimmt, wobei unter zeitlicher Mittelung oder durch zeitliche Mittelung dieser Werte der Schätzwert für die mechanische Rotorleistung gebildet wird, der somit einen zeitlichen Mittelwert für die geschätzte mechanische Rotorleistung repräsentiert. Die Mittelung erfolgt vorzugsweise über ein vorgewähltes Zeitintervall. Bevorzugt bildet der Schätzwert für die mechanische Rotorleistung einen fortlaufenden zeitlichen Mittelwert.

Das Bestimmen des Schätzwertes für die elektrische Leistung erfolgt z.B. unter Anwendung eines oder wenigstens eines Verfahrens zur Systemidentifikation. Bevorzugt werden für unterschiedliche Betriebsbedingungen der Windkraftanlage von der mechanischen Rotorleistung abhängige Betriebswerte und Leistungswerte zum Abschätzen der elektrischen Leistung in einer Leistungstabelle hinterlegt, wobei die Leistungswerte zum Abschätzen der elektrischen Leistung vorzugsweise mit den von der mechanischen Rotorleistung abhängigen Betriebswerten in Beziehung stehen. Bevorzugt wird der Schätzwert für die elektrische Leistung unter Verwendung der Leistungstabelle bestimmt. Die in der Leistungstabelle hinterlegten Werte können z.B. durch Modellbildung berechnet und/oder durch Versuche ermittelt werden.

Gemäß einer Weiterbildung der Erfindung erfolgt die Bestimmung des Schätzwertes für die elektrische Leistung zusätzlich auf Basis des wenigstens einen die zumindest eine Kenngröße des Windfelds charakterisierenden Werts.

Die elektrische Leistung wird vorzugsweise in Abhängigkeit von wenigstens einem Sollwert für die elektrische Leistung geregelt. Bevorzugt wird der wenigstens eine Sollwert für die elektrische Leistung abgefragt, der insbesondere einen Sollwert für die elektrische Wirkleistung und/oder einen Sollwert für die elektrische Blindleistung umfasst. Bevorzugt wird der Schätzwert für die elektrische Leistung zusätzlich auf Basis des wenigstens einen Sollwerts für die elektrische Leistung bestimmt.

Gemäß einer Ausgestaltung der Erfindung wird wenigstens eine physikalische Eigenschaft der Luft am Ort der Windkraftanlage gemessen. Vorzugsweise erfolgt die Messung am Ort des Rotors. Bevorzugt werden der wenigstens eine die zumindest eine Kenngröße des Windfelds charakterisierende Wert und/oder der Schätzwert für die mechanische Rotorleistung zusätzlich unter Verwendung der gemessenen wenigstens einen physikalischen Eigenschaft der Luft bestimmt. Das Messen der wenigstens einen physikalischen Eigenschaft der Luft umfasst insbesondere das Messen der Luftdichte und/oder der Lufttemperatur, sodass die wenigstens eine physikalische Eigenschaft der Luft vorzugsweise die Luftdichte und/oder die Lufttemperatur umfasst.

Gemäß einer Ausgestaltung der Erfindung wird wenigstens eine physikalische Eigenschaft des Rotors gemessen. Die wenigstens eine physikalische Eigenschaft des Rotors umfasst bevorzugt den Rotorwinkel und/oder die Rotationsgeschwindigkeit des Rotors und/oder den Blattwinkel des wenigstens einen Rotorblatts und/oder die Rotorbeschleunigung.

Der Betriebszustand der Windkraftanlage ist bevorzugt durch wenigstens eine Betriebszustandsgröße gekennzeichnet, welche die wenigstens eine physikalische Eigenschaft der Luft und/oder die wenigstens eine physikalische Eigenschaft des Rotors umfasst. Die wenigstens eine Betriebszustandsgröße wird bevorzugt gemessen. Insbesondere umfasst die gemessene wenigstens eine Betriebszustandsgröße die gemessene wenigstens eine physikalische Eigenschaft der Luft und/oder die gemessene wenigstens eine physikalische Eigenschaft des Rotors.

Gemäß einer Weiterbildung der Erfindung sind in der Windfeld-Tabelle zusätzlich für unterschiedliche Betriebszustände der Windkraftanlage Werte für die wenigstens eine Betriebszustandsgröße hinterlegt, wobei die Werte zum Abschätzen der mechanischen Rotorleistung vorzugsweise zusätzlich mit den Werten für die wenigstens eine Betriebszustandsgröße in Beziehung stehen. Bevorzugt wird ein in der Windfeld-Tabelle hinterlegter Wert zum Abschätzen der mechanischen Rotorleistung unter Verwendung der gemessenen wenigstens einen physikalischen Eigenschaft und der gemessenen wenigstens einen Betriebszustandsgröße ermittelt.

Gemäß einer Weiterbildung der Erfindung umfasst das Messen der wenigstens einen physikalische Eigenschaft des wenigstens einen Rotorblatts das Messen einer Dehnung und/oder einer Torsion und/oder einer Biegung des wenigstens einen Rotorblatts, insbesondere an jeweils wenigstens einer vorbestimmten Position desselben. Somit umfasst die wenigstens eine physikalische Eigenschaft des wenigstens einen Rotorblatts bevorzugt eine Dehnung und/oder eine Torsion und/oder eine Biegung des wenigstens einen Rotorblatts, insbesondere an der oder den wenigstens einen vorbestimmten Positionen.

Vorzugsweise wird ein aktueller Wert der elektrischen Leistung gemessen. In diesem Fall wird insbesondere die Differenz zwischen und/oder der Quotient aus dem Schätzwert für die elektrische Leistung und dem aktuellen Wert der elektrischen Leistung berechnet.

Gemäß einer Weiterbildung der Erfindung wird ein aktueller Wert der mechanischen Rotorleistung gemessen. In diesem Fall wird insbesondere die Differenz zwischen und/oder der Quotient aus dem Schätzwert für die mechanische Rotorleistung und dem aktuellen Wert der mechanischen Rotorleistung berechnet.

Die Erfindung wird nachfolgend anhand bevorzugter Ausführungsformen unter Bezugnahme auf die Zeichnung beschrieben. In der Zeichnung zeigen:

Fig. 1    ein schematisches Blockschaltbild einer Estimations-Einheit einer erfindungsgemäßen Windkraftanlage,

Fig. 2    eine perspektivische Teilansicht der Windkraftanlage,

Fig. 3    eine andere perspektivische Teilansicht der Windkraftanlage,

Fig. 4    ein schematisches Blockschaltbild eines ersten Teils einer aus Fig. 1 ersichtlichen Windfeld-Estimations-Anordnung gemäß einer einfachen Ausgestaltung,

Fig. 5    ein schematisches Blockschaltbild des ersten Teils der Windfeld-Estimations-Anordnung gemäß einer bevorzugten Ausgestaltung,

Fig. 6    ein schematisches Blockschaltbild des ersten Teils der Windfeld-Estimations-Anordnung gemäß einer weiteren Ausgestaltung,

Fig. 7    ein schematisches Blockschaltbild eines zweiten Teils der aus Fig. 1 ersichtlichen Windfeld-Estimations-Anordnung,

Fig. 8    ein schematisches Blockschaltbild des zweiten Teils der Windfeld-Estimations-Anordnung mit Korrekturgliedern und

Fig. 9    ein schematisches Blockschaltbild des zweiten Teils der Windfeld-Estimations-Anordnung mit einer Sucheinheit.

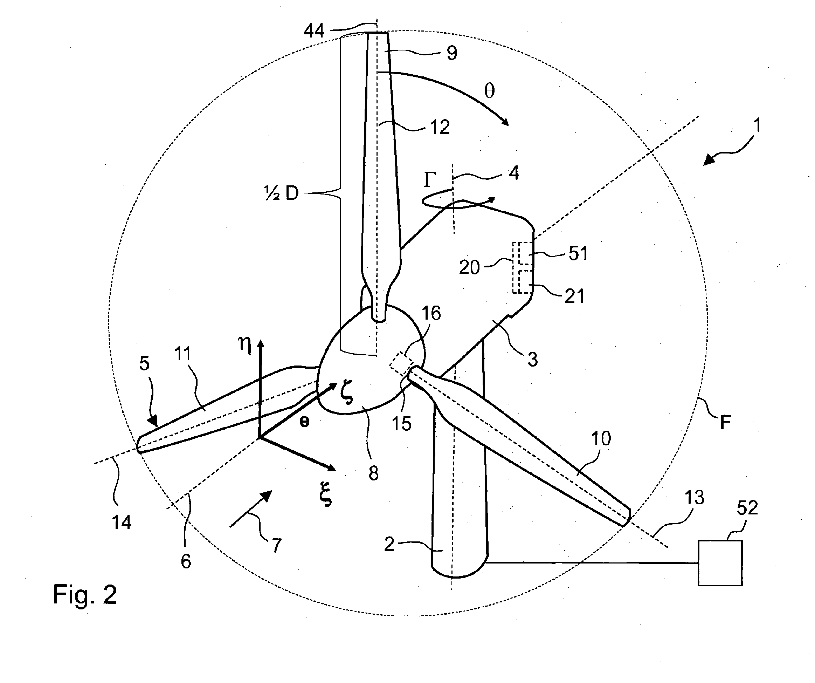

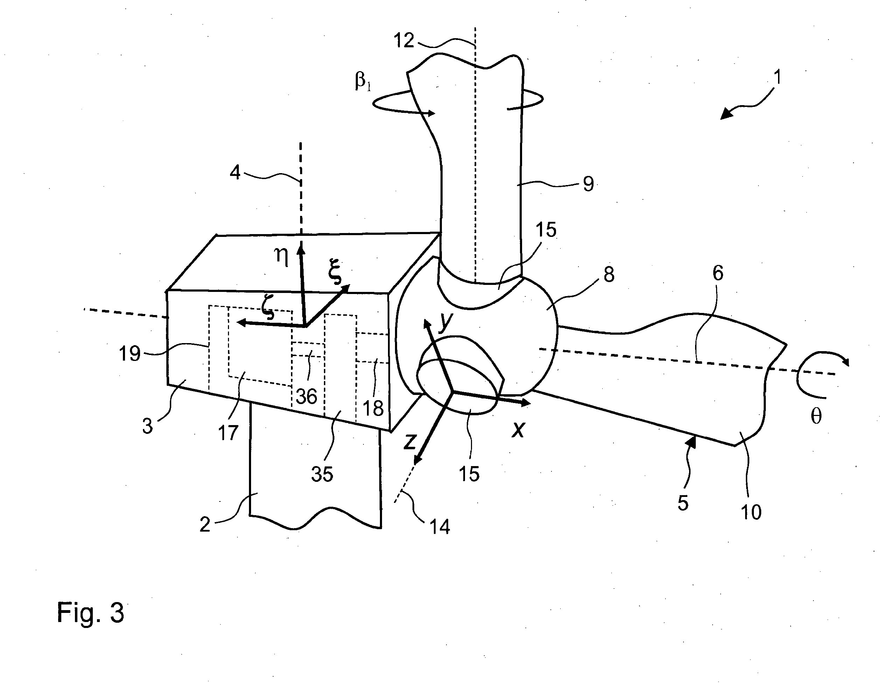

Aus den Fig. 2 und 3 sind unterschiedliche Darstellungen einer erfindungsgemäßen Windkraftanlage 1 ersichtlich, die einen Turm 2 umfasst, an dessen oberen Ende eine Gondel 3 (Maschinenträger) um eine Gierachse 4 drehbar gelagert ist, wobei die Verdrehung der Gondel 3 um die Gierachse 4 durch den Gierwinkel $\Gamma$ gekennzeichnet ist. An der Gondel 3 ist ein Rotor 5 um eine Rotorachse 6 drehbar gelagert und wird um diese durch Wind 7 gedreht, wobei die Rotationsposition des Rotors 5 durch einen Rotorwinkel $\theta$ gekennzeichnet ist. Der Rotor 5 umfasst eine Rotornabe 8, an der drei Rotorblätter 9, 10 und 11 befestigt sind, die sich entlang ihrer jeweiligen Blattachsen 12, 13 bzw. 14 von der Rotornabe 8 wegerstrecken. Die Blattachsen 12, 13 und 14 verlaufen jeweils quer zur Rotorachse 6 und schließen untereinander Winkel von jeweils 120° ein. Die Rotorblätter sind durch Blattlager 15 um ihre Blattachsen drehbar an der Rotornabe 8 gelagert, wobei die Verdrehung der Rotorblätter um ihre Blattachsen jeweils durch einen Blattwinkel $\beta_i$ gekennzeichnet ist. Der Index i kennzeichnet dabei das jeweilige Rotorblatt, wobei i=1 das Rotorblatt 9, i=2 das Rotorblatt 10 und i=3 das Rotorblatt 11 kennzeichnet. Zum Drehen der Rotorblätter um ihre Blattachsen sind Blattwinkelverstellantriebe 16 vorgesehen, die vorzugsweise im Bereich der Blattlager 15 sitzen. Der Rotorwinkel $\theta$ wird durch die Position eines bestimmten der Rotorblätter, hier des Rotorblatts 9 zu einer Referenzlage 44 beschrieben. Gemäß der aus Fig. 2 ersichtlichen Momentanstellung des Rotorblatts 9 beträgt der Rotorwinkel somit $\theta = 0$.

In der Gondel 3 ist ein elektrischer Generator 17 angeordnet, der Teil eines elektrischen Systems 19 der Windkraftanlage 1 ist und durch den Rotor 5 unter Zwischenschaltung eines Getriebes 35 angetrieben wird. Der Rotor 5 ist über eine Rotorwelle 18 mit dem Getriebe 35 verbunden, welches abtriebsseitig mit der Generatorwelle 36 verbunden ist. Die Rotorwelle 18, das Getriebe 35 und die Generatorwelle 36 bilden somit einen Antriebsstrang der Windkraftanlage 1. Die Windkraftanlage 1 wird mittels einer auch als Hauptsteuerung bezeichneten Steuereinheit 20 gesteuert, die eine Estimations-Einheit 21 zum Schätzen der von dem elektrischen System 19 erzeugten elektrischen Leistung P umfasst. Die elektrische Leistung P wird mittels der Steuereinheit 20 geregelt, und zwar bevorzugt sowohl hinsichtlich ihrer Wirkleistung als auch hinsichtlich ihrer Blindleistung. Zum Regeln der elektrischen Leistung P steuert die Steuereinheit 20 das elektrische System 19 sowie die Blattwinkelverstellantriebe 16. Die Hauptsteuerung 20 umfasst ferner ein SCADA-System 51, mittels welchem Informationen zu einem oder mehreren datenverarbeitenden Systemen 52 übertragen werden können, die mit der Windkraftanlage 1 verbunden und insbesondere extern von dieser vorgesehen sind.

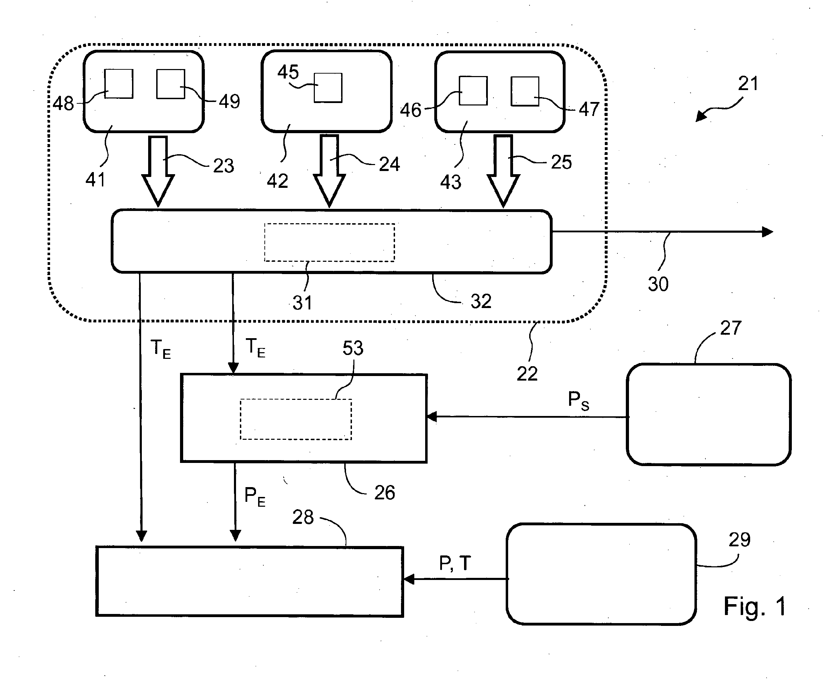

Die in Fig. 1 detaillierter dargestellte Estimations-Einheit 21 umfasst eine Windfeld-Estimations-Anordnung 22 mit einem Windfeld-Estimator 32 und mehreren Messmitteln 41, 42 und 43, die auf Basis von gemessenen physikalischen Größen Blattsensorsignale 23, Rotorsensorsignale 24 und atmosphärische Signale (Luftsensorsignale) 25 zur Verfügung stellen und an den Windfeld-Estimator 32 übermitteln. Dabei charakterisieren die Blattsensorsignale 23 physikalische Eigenschaften zumindest eines der Rotorblätter, die Rotorsensorsignale 24 physikalische Eigenschaften des Rotors 5 und die Luftsensorsignale 25 physikalische Eigenschaften der Atmosphäre bzw. der Luft. Das Messmittel 41 wird auch Blattsensormittel, das Messmittel 42 auch als Rotorsensormittel und das Messmittel 43 auch als Luftsensormittel bezeichnet.

Die Estimations-Einheit 21 verwendet die Signale 23, 24 und 25, um sowohl Schätzwerte für Kenngrößen eines Windfelds als auch einen Schätzwert $T_E$ für die mechanische Rotorleistung $T$ zu bestimmen, die von dem Rotor 5 über die Rotorwelle 18 abgegeben wird. Das Windfeld beschreibt dabei den Wind 7 in oder im Bereich der von dem Rotor 5 überstrichenen Fläche $F$. Die Schätzwerte werden an einen Leistungs-Estimator 26 der Estimations-Einheit 21 abgegeben.

Eine Meldeeinheit 27 der Estimations-Einheit 21 fragt, insbesondere von der Steuereinheit 20, den Sollwert $P_S$ für die elektrische Leistung ab und übermittelt diesen an den Leistungs-Estimator 26, der einen Schätzwert $P_E$ für die elektrische Leistung auf Basis des Sollwerts $P_S$ und des Schätzwertes $T_E$ für die mechanische Rotorleistung bestimmt und an ein Datenerfassungssystem 28 übermittelt. Ferner misst ein Messmittel 29, insbesondere im elektrischen System 19, den aktuellen Wert der elektrischen Leistung $P$ und übermittelt diesen an das Datenerfassungssystem 28. Vorzugsweise misst das Messmittel 29, insbesondere im Antriebsstrang, auch den aktuellen Wert der mechanischen Rotorleistung $T$ und übermittelt diesen an das Datenerfassungssystem 28. Das Datenerfassungssystem 28 sammelt und/oder speichert den Schätzwert $P_E$ für die elektrische Leistung und den aktuellen Wert der elektrischen Leistung $P$ und berechnet die Differenz zwischen diesen beiden Werten. Das Messmittel 29 weist somit vorzugsweise ein Messmittel für elektrische Leistung, mittels welchem der aktuelle Wert der elektrischen Leistung $P$ messbar ist, und ein Messmittel für mechanische Leistung auf, mittels welchem der aktuelle Wert der mechanischen Rotorleistung $T$ messbar ist. Bevorzugt umfasst die Estimations-Einheit 21 das Messmittel 29. Ferner kann die Estimations-Einheit 21 auch das Datenerfassungssystem 28 umfassen.

Die Kenngrößen des Windfelds umfassen insbesondere die Windgeschwindigkeit und/oder die Windrichtung und/oder die Windscherung. Die Windrichtung umfasst bevorzugt die Windrichtung in der horizontalen Ebene und/oder die Windrichtung in der vertikalen Ebene. Die Windscherung umfasst bevorzugt die horizontale Windscherung und/oder die vertikale Windscherung. Die Kenngrößen des Windfelds beschreiben somit Eigenschaften des Winds 7 in oder im Bereich der vom Rotor 5 überstrichenen Fläche $F$.

Bevorzugt empfängt und/oder sammelt der Windfeld-Estimator 32 die folgenden Daten:

- Daten der Blattsensorsignale 23 (Rotorblattdaten) von zumindest einem oder jedem Rotorblatt,
- Daten der Rotorsensorsignale 24 (Rotordaten), welche den Rotorwinkel $\theta$ und/oder die Rotationsgeschwindigkeit $\Omega$ des Rotors 5 und/oder den Blattwinkel $\beta_i$ zumindest eines oder jedes Rotorblatts und/oder vorzugsweise auch die Rotorbeschleunigung $d\Omega/dt$ umfassen,
- Daten der Luftsensorsignale 25 (atmosphärische Daten), welche die Luftdichte $\rho$ und/oder die Lufttemperatur $\Theta_a$ am Ort der Windkraftanlage 1, insbesondere im Bereich des Rotors 5 umfassen.

Das Messmittel 42 umfasst bevorzugt eine Rotorsensorik 45, mittels welcher der Rotorwinkel $\theta$ und/oder die Rotationsgeschwindigkeit $\Omega$ und/oder die oder der zumindest eine Blattwinkel $\beta_i$ und/oder vorzugsweise auch die Rotorbeschleunigung $d\Omega/dt$ erfassbar sind. Ferner umfasst das Messmittel 43 bevorzugt einen Luftdichtesensor 46, mittels welchem die Luftdichte $\rho$ erfassbar ist, und/oder einen Lufttemperatursensor 47 mittels welchem die Lufttemperatur $\Theta_a$ erfassbar ist.

Aus den Signalen 23, 24 und 25 bzw. aus deren Daten werden die Schätzwerte für die Kenngrößen des Windfelds bestimmt.
Diese Schätzwerte umfassen Schätzwerte für die Windgeschwindigkeit und/oder für die Windrichtung und/oder für die horizontale Windscherung und/oder für die vertikale Windscherung. Ferner wird der Schätzwert $T_E$ für die mechanische Rotorleistung bestimmt, die der Rotor 5 an den Antriebsstrang der Windkraftanlage 1 abgibt. Diese Schätzwerte werden bevorzugt über eine Informationsleitung 30 an die Steuereinheit 20 der Windkraftanlage 1 übermittelt und können zu Steuerungszwecken verwendet werden. Bevorzugt werden die Schätzwerte auch an das Datenerfassungssystem 28 übermittelt, sodass sie von diesem verwertet werden können.

Der Schätzwert $T_E$ für die mechanische Rotorleistung wird an den Leistungs-Estimator 26 übermittelt, der diese Information zum Berechnen des Schätzwertes $P_E$ für die elektrische Leistung verwendet. Dieser Schätzwert $P_E$ charakterisiert eine elektrische Leistung, die von dem elektrischen System 19 erzeugt werden sollte, wenn die mechanische Rotorleistung dem Schätzwert $T_E$ entspricht.

Gemäß einer Ausgestaltung berechnet der Leistungs-Estimator 26 den Schätzwert $P_E$ für die elektrische Leistung (zumindest) auf Basis des gegebenen Schätzwertes $T_E$ für die mechanische Rotortorleistung unter Verwendung von Informationen, die durch wenigstens ein Systemidentifikationsverfahren gewonnen werden. Gemäß einer anderen Ausgestaltung verwendet der Leistungs-Estimator 26 ein Modell des elektrischen Systems 19, um zu dem Schätzwert $P_E$ für die elektrische Leistung zu gelangen.

Gemäß einer bevorzugten Ausgestaltung werden der Schätzwert $T_E$ für die mechanische Rotorleistung, die Rotationsgeschwindigkeit $\Omega$ des Rotors 5 und die atmosphärische Temperatur (Lufttemperatur) $\Theta_a$ über ein vorgewähltes Zeitintervall zeitlich gemittelt (z.B. in Form von fortlaufenden zeitlichen Mittelwerten) und dann an den Leistungs-Estimator 26 übermittelt. Zusätzlich übermittelt die Meldeeinheit 27, mittels welcher der Sollwert $P_S$ für die elektrische Leistung abgefragt wird, eine Information über den aktuell von der Steuereinheit 20 angewiesenen Sollwert $P_S$ für die elektrische Leistung an den Leistungs-Estimator 26, wobei der Sollwert bevorzugt sowohl die Wirkleistung als auch die Blindleistung umfasst. Diese Information wird ebenfalls zeitlich über ein Zeitintervall gemittelt, welches dem oder im Wesentlichen dem vorgewählten Zeitintervall entspricht, über welches die mechanischen Daten gemittelt werden oder worden sind. Der Leistungs-Estimator 26 verwendet sowohl den Schätzwert $T_E$ für die mechanische Rotorleistung als auch den Sollwert $P_S$ für die elektrische Leistung, um den Schätzwert $P_E$ für die elektrische Leistung zu berechnen.

Gemäß einer Ausgestaltung verwendet der Leistungs-Estimator 26 eine Tabelle 53 (Leistungstabelle) oder ein äquivalentes funktionelles Werkzeug zum Herstellen von Beziehungen, um Schätzwerte für die elektrische Leistung zu speichern, wenn die Windkraftanlage 1 bei unterschiedlichen Bedingungen betrieben wird. Zur Vereinfachung werden die gespeicherten Beziehungen jeweils bei einem Betrieb der Windkraftanlage 1 im stationären Zustand ermittelt. Allerdings können die oder kann ein Teil der gespeicherten Beziehungen auch bei einem Betrieb der Windkraftanlage 1 im Beschleunigungszustand und/oder im Verzögerungszustand ermittelt werden, wenn die dadurch hervorgerufenen zusätzlichen Kosten akzeptabel sind. Die in der Tabelle 53 gespeicherten Schätzwerte für die elektrische Leistung (d.h. die erwarteten Werte für die elektrische Leistung) sind funktional abhängig von der stationären mechanischen Rotorleistung, von der Rotorgeschwindigkeit, von der Umgebungstemperatur (vorzugsweise Lufttemperatur) und von den Einstellungen (vorzugsweise Sollwerte) für die Wirk- und Blindleistung. Gemäß einer anderen Ausgestaltung ist die Tabelle 53 funktional abhängig von folgenden Größen: von der stationären mechanischen Rotorleistung, von der Rotorgeschwindigkeit, von der Umgebungstemperatur, von den Einstellungen für die Wirk- und Blindleistung sowie von der Änderungsrate der genannten Größen.

Gemäß einer anderen Ausgestaltung verwendet der Leistungs-Estimator 26 ein Modell des elektrischen Systems 19 zum Berechnen des Schätzwerts $P_E$ für die elektrische Leistung auf Basis von exakten oder angenäherten Steuerungsgleichungen oder auf Basis von Modellen für eine oder mehrere Komponenten des elektrischen Systems 19. Auch ist eine Mischung aus tabellenbasierter und modellbasierter Berechnung möglich.

Falls das elektrische System 19 sensitiv für zusätzliche, messbare Parameter ist, wie z.B. für die Temperatur der Generatorwicklungen und/oder für die Temperatur der Leistungselektronik, wird der Leistungs-Estimator 26 vorzugsweise derart ausgebildet, dass er zusätzlich funktional abhängig von diesen zusätzlichen, messbaren Parametern ist. Während des Betriebs der Windkraftanlage 1 werden diese zusätzlichen, messbaren Parameter gemessen und von dem Leistungs-Estimator 26 verwendet, um den Schätzwert $P_E$ für die elektrische Leistung zu berechnen.

Ist der Schätzwert $P_E$ für die elektrische Leistung durch den Leistungs-Estimator 26 bestimmt, übermittelt der Leistungs-Estimator 26 eine Information über diesen Schätzwert an das Datenerfassungssystem 28, welches die Information speichert und verarbeitet und ggf. an einen Endnutzer, wie dem Windkraftanlagenbetreiber, überträgt. Ferner kann die Information zu den anderen datenverarbeitenden Systemen 52 übertragen werden. Hierfür ist das Datenerfassungssystem 28 mit dem SCADA-System 51 verknüpft und kann somit auch als SCADA-Einheit bezeichnet werden. Das Datenerfassungssystem 28 empfängt ferner den Schätzwert $T_E$ für die mechanische Rotorleistung von dem Windfeld-Estimator 32. Gemäß der bevorzugten Ausgestaltung werden der aktuelle Wert der mechanischen Rotorleistung und der aktuelle Wert der elektrischen Leistung durch das Messmittel 29 gemessen, wobei Informationen über diese Werte an das Datenerfassungssystem 28 übertragen werden. Diese Informationen können auch als SCADA-Informationen bezeichnet werden. Eine Messung der aktuellen mechanischen Rotorleistung kann beispielsweise dadurch erfolgen, dass das zwischen dem Getriebe 35 und dem Generator 17 übertragene Drehmoment gemessen wird. Alternativ kann die aktuelle mechanische Rotorleistung aber auch an der Rotorwelle oder an einem anderen Ort im Antriebsstrang gemessen werden. Zur Messung des Drehmoments wird insbesondere ein Drehmomentaufnehmer verwendet, der vorzugsweise an einer Welle im Antriebsstrang, wie z.B. der Rotorwelle oder der Generatorwelle, angeordnet ist. Beispielsweise umfasst der Drehmomentaufnehmer Dehnungsmessstreifen, mittels welchen die Verformung der Welle oder eines an dieser angeordneten Messkörpers erfassbar ist.

Ein Vergleich zwischen dem Schätzwert für die elektrische Leistung und dem aktuellen Wert der elektrischen Leistung sowie ein Vergleich zwischen dem Schätzwert für die mechanische Rotorleistung und dem aktuellen Wert der mechanischen Rotorleistung wird mittels des Datenerfassungssystems 28 durchgeführt. Vorzugsweise werden diese Vergleiche auch von extern von der Windkraftanlage vorgesehenen Einheiten durchgeführt, welche die SCADA-Informationen empfangen können.

Wenn der Unterschied zwischen dem Schätzwert für die elektrische Leistung und dem aktuellen Wert der elektrischen Leistung im zeitlichen Mittel einen vorbestimmten ersten Schwellenwert übersteigt, wird bevorzugt ein erstes Signal an den Endnutzer gesendet, welches eine Verschlechterung des Zustands des Antriebsstrangs und/oder elektrischer Komponenten der Windkraftanlage anzeigt. Wenn der Unterschied zwischen dem Schätzwert für die elektrische Leistung und dem aktuellen Wert der elektrischen Leistung im zeitlichen Mittel einen vorbestimmten zweiten Schwellenwert übersteigt, wird bevorzugt ein zweites Signal an den Endnutzer gesendet, welches eine starke Verschlechterung des Zustands des Antriebsstrangs und/oder elektrischer Komponenten der Windkraftanlage oder einen Fehler im System anzeigt. Insbesondere wird das zweite Signal auch zu der Steuereinheit 20 der Windkraftanlage 1 übertragen.

Die Kenngrößen des Windfelds umfassen bevorzugt räumlich über die von dem Rotor überstrichene Fläche gemittelte Windgeschwindigkeitswerte des Winds. Da der Mittelwert räumlich gebildet wird, sind zeitliche Änderungen der Daten bevorzugt nicht durch diese Mittelung beeinflusst.

Unter Bezugnahme auf Fig. 2 wird ein orthogonales, nicht mit dem Rotor rotierendes, gondelfestes Koordinatensystem mit den Koordinaten $\xi$, $\eta$ und $\zeta$ eingeführt. Die $\zeta$-Koordinate zeigt entlang der Rotorachse 6 und wird durch einen Einheitsvektor e gekennzeichnet (fettgedruckte Buchstaben bezeichnen Vektoren). Die $\eta$-Koordinate zeigt vertikal nach oben und die $\xi$-Koordinate zeigt in die horizontale Richtung. Eine erste Kenngröße des Windfelds ist die mittlere Windgeschwindigkeit $V_m$:

$$\mathbf{V}_m(t) = \frac{1}{F} \iint \mathbf{V}(t) dF \,,$$

wobei F die vom Rotor überstrichene Fläche, t die Zeit und V($t$) die Windgeschwindigkeit an der vom Rotor überstrichenen Fläche $F$ zu der Zeit $t$ bezeichnet. Zur Vereinfachung der Darstellung wird nachfolgend die explizite Notation "($t$)" weggelassen, welche die Zeitabhängigkeit von Variablen kennzeichnet.

Die mittlere Windgeschwindigkeit $V_m$ umfasst Komponenten $V_1$, $V_2$ und $V_3$, wobei $V_1$ in Richtung $\xi$, $V_2$ in Richtung $\eta$ und $V_3$ in Richtung $\zeta$ weist. Aus diesen Komponenten kann die Windrichtung in der horizontalen Ebene und in der vertikalen Ebene direkt berechnet werden:

$$\chi_H = \arctan(V_1 / V_3)$$

$$\chi_V = \arctan(V_2 / V_3)$$

Die Winkel $\chi_H$ und $\chi_V$ kennzeichnen die Abweichung der Windrichtung von der Rotorachse 6. Der horizontale Winkel $\chi_H$ wird in der Literatur auch als "Gier-Fehler" bezeichnet und wird üblicherweise zu Steuerungszwecken mit dem Ziel verwendet, seinen Wert zu minimieren. Der vertikale Winkel $\chi_V$ beinhaltet insbesondere auch den Neigungswinkel der Gondel 3, der einen geometrisch festen Wert bildet. Durch den Neigungswinkel können z.B. örtliche Gegebenheiten des Geländes am Ort der Windkraftanlage berücksichtigt werden. In der Regel ist der Neigungswinkel nicht während des Betriebs der Windkraftanlage regulierbar. Entsprechendes kann für den Gierwinkel $\Gamma$ gelten.

Eine zweite Kenngröße des Windfelds ist das erste horizontale Moment $\psi_1$ des Windfelds:

$$\psi_1 = \frac{1}{F} \iint \frac{\mathbf{V} \cdot \mathbf{e} - V_3}{V_3} \left(\frac{\xi}{D}\right) dF \,,$$

wobei D den Rotordurchmesser bezeichnet und $\xi$ von der Rotorachse 6 aus gemessen wird. Die Größe $\psi_1$ ist proportional zur linearen Windscherung in der horizontalen Ebene und kann somit auch als horizontale Windscherung bezeichnet werden.

Eine dritte Kenngröße des Windfelds ist das erste vertikale Moment $\phi_1$ des Windfelds:

$$\phi_1 = \frac{1}{F} \iint \frac{\mathbf{V} \cdot \mathbf{e} - V_3}{V_3} \left(\frac{\eta}{D}\right) dF \,,$$

wobei $\eta$ von der Rotorachse 6 aus gemessen wird. Die Größe $\phi_1$ ist proportional zu der linearen Windscherung in der vertikalen Ebene und kann somit auch als vertikale Windscherung bezeichnet werden.

Momente höherer Ordnung des Windfelds bilden zusätzliche Kenngrößen des Windfelds. Das zweite horizontale Moment $\psi_2$ ist

$$\psi_2 = \frac{1}{F} \iint \frac{\mathbf{V} \cdot \mathbf{e} - V_3}{V_3} \left(\frac{\xi}{D}\right)^2 dF$$

und das zweite vertikale Moment $\phi_2$ ist

$$\phi_2 = \frac{1}{F} \iint \frac{\mathbf{V} \cdot \mathbf{e} - V_3}{V_3} \left(\frac{\eta}{D}\right)^2 dF \,.$$

Das Blattsensormittel 41 der Windfeld-Estimations-Anordnung 22 umfasst Sensoren, die vorzugsweise in, innerhalb, auf oder auf andere Weise an den Rotorblättern oder der Rotornabe befestigt sind. Diese Sensoren produzieren die Blattsensorsignale 23, die abhängig von den Kenngrößen des Windfelds sind.

Die Windfeld-Estimations-Anordnung 22 verwendet, insbesondere unter Anwendung eines Systemidentifikationsverfahrens, wenigstens eines der Blattsensorsignale 23, welches von wenigstens einer der Kenngrößen des Windfelds abhängig ist.

Gemäß der bevorzugten Ausgestaltung ist dieses Blattsensorsignal entweder proportional zu der Blattdehnung oder Blattbiegung wenigstens eines der Rotorblätter, gemessen an einem vorbestimmten Ort entlang desselben. Messungen des Luftdrucks oder der Luftgeschwindigkeit an vorbestimmten Orten der Blattoberfläche können ebenfalls verwendet werden, sind wegen ihrer Anfälligkeit gegenüber Verschmutzung und Ausfall aber nicht bevorzugt. Das Sensormittel 41 umfasst somit bevorzugt wenigstens einen Dehnungssensor 48 und/oder wenigstens einen Biegungssensor 49. Die Blattdehnung kann z.B. durch an der Blattfläche montierte oder in diese eingebettete optische Fasern, durch am Blatt befestigte Dehnungsmessstreifen oder durch Dehnungsmessungen an den Bolzen gemessen werden, mittels welchen das Blatt am Blattlager befestigt ist. Das Torsionsmoment des Blatts kann z.B. dadurch bestimmt werden, dass das Drehmoment gemessen wird, welches von der zugehörigen Blattwinkelverstelleinrichtung 16 aufgebracht wird, um das Blatt in einer konstanten Blattwinkelposition zu halten. Blattdeformationsmessungen können z.B. durch optische Systeme durchgeführt werden, die innerhalb des Blatts vorgesehen sind. Solche optischen Systeme können z.B. im Rotor installierte Kameras umfassen, die durch die Blattdeformation bedingte Lageabweichungen eines im Rotorblatt angeordneten Markierungsfelds detektieren und auswerten können. Die Blattbiegemomente können z.B. von den durch die Blattdehnungsmessungen gewonnenen Werten und von der bekannten Geometrie des Blatts abgeleitet werden. Obwohl lediglich anhand eines Rotorblatts beschrieben, können die hier beschriebenen Messungen an mehreren oder an jedem der Rotorblätter durchgeführt werden.

Unter Bezugnahme auf Fig. 3 wird zur Beschreibung der Blattsensorsignale 23 ein orthogonales, mit dem Rotor rotierendes, blattfestes Koordinatensystem mit den Koordinaten $x$, $y$ und $z$ eingeführt. Die $x$-Richtung verläuft gemäß Fig. 3 entlang der Rotorachse 6, die Achse $z$ ist parallel zu der Drehachse des Blattlagers 15, die mit der zugehörigen Blattachse 14 zusammenfällt, und die Richtung $y$ vervollständigt das ein Rechtssystem bildende Koordinatensystem. Da es sich hier um ein blattfestes Koordinatensystem handelt, ist es zusammen mit dem Blatt um die Blattachse 14 drehbar, sodass sich die aus Fig. 3 ersichtlichen Lagen der Koordinatenachsen $x$ und $y$ ändern können.

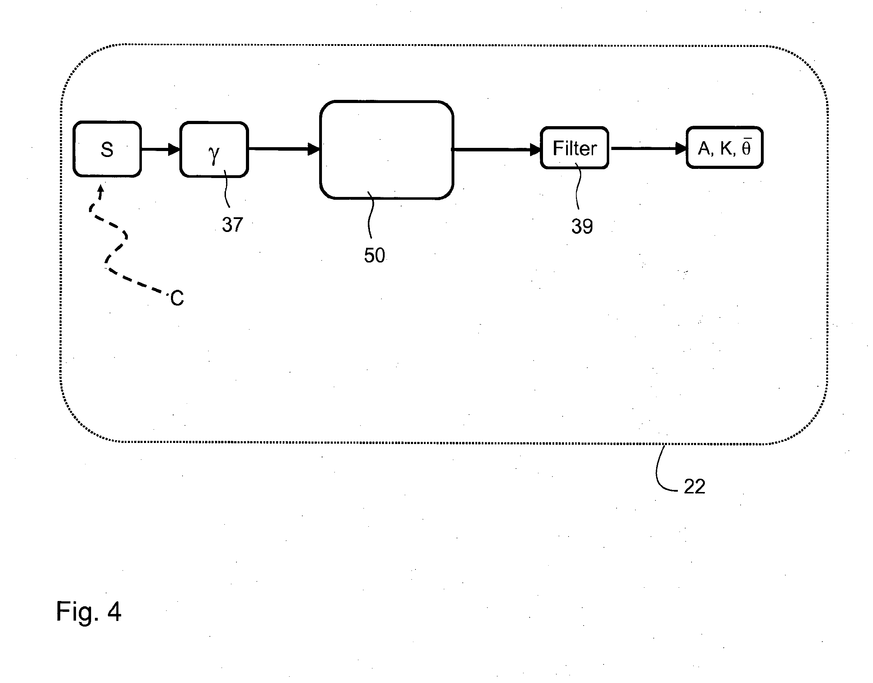

Unter Bezugnahme auf Fig. 4 wird eine einfache Ausgestaltung der Windfeld-Estimations-Anordnung 22 beschrieben, wobei $S$ ein Blattsensorsignal von einem an der Rotornabe oder an einem der Rotorblätter angeordneten Sensor des Sensormittels 41 bezeichnet, der eine physikalische Eigenschaft des Rotorblatts misst, wobei das Blattsensorsignal $S$ abhängig von wenigstens einer Kenngröße des Windfelds ist, die mit $C$ bezeichnet wird. Bei einer Fehlausrichtung zwischen der Rotorachse 6 und der Windrichtung oder beim Auftreten einer Windscherung erzeugt die Drehung des Rotors, die durch den Winkel $\theta$ beschrieben wird, eine zyklische Variation in dem Blattsensorsignal $S$, die einem konstanten Wert überlagert ist. In diesem Zusammenhang bezeichnet $A$ die Amplitude der zyklischen Variation, $\overline{\theta}$ den Winkel $\theta$, an dem das Maximum bzw. die Amplitude auftritt und $K$ den konstanten Wert des Signals. Die Werte von $A$, $K$ und $\overline{\theta}$ charakterisieren somit in Kombination das Blattsensorsignal $S$ vollständig. In Fig. 4 sind ferner eine Einrichtung zur Verstärkungsanpassung 37 mit einer Verstärkung $\gamma$ (und ggf. einem Offset), eine Einrichtung zur Erfassung eines Spitzen- und eines Mittelwerts 50 sowie ein Filter 39 dargestellt. Bevorzugt bilden die Werte der resultierenden Signale $A$, $K$ und $\overline{\theta}$ die wenigstens eine Kenngröße $C$ des Windfelds charakterisierende Werte.

Eine Tabelle, welche die das Blattsensorsignal charakterisierenden Werte $A$, $K$ und $\overline{\theta}$ mit dem Wert $C$ für der Kenngröße des Windfelds in Beziehung setzt, wird dadurch erstellt, dass Werte für $C$ über Werte des Tripletts $\{A, K, \overline{\theta}\}$ aufgezeichnet werden, wenn die Windkraftanlage 1 bei unterschiedlichen Windbedingungen betrieben wird. Dieser Ablauf kann durch ein genaues aeroelastisches Simulationsprogramm für die Windkraftanlage oder alternativ durch einen Betrieb der Windkraftanlage im Windfeld in Kombination mit unabhängigen Messeinrichtungen zum Ermitteln der Kenngrößen $C$ des Windfelds erfolgen.

Gemäß der bevorzugten Ausgestaltung wird eine Mehrzahl von Blattsensorsignalen verwendet. Die Identifikation der zyklischen und konstanten Komponenten der Signale wird dabei durch eine sogenannte Multi-Blade-Coordinate-Transformation (MBC-Transformation) durchgeführt, die in der Literatur alternativ auch als Coleman-Transformation bezeichnet wird. Diese Transformation ist aus dem Stand der Technik bekannt und kann verwendet werden, wenn der Rotor drei oder mehr Rotorblätter aufweist. Obwohl die Beschreibung der Ausgestaltung anhand von drei Rotorblättern erfolgt, ist eine Erweiterung auf vier oder mehr Rotorblätter für den Fachmann auf einfache Weise möglich.

Es wird zwischen zwei Arten von MBC-Transformationen unterschieden: 1) Eine standardmäßige 1p-MBC-Transformation, welche folgende Informationen über die Signale liefert: die konstanten Komponenten sowie die Amplituden der $\cos(\theta)$- und $\sin(\theta)$-Komponenten. 2) Eine 2p-MBC-Transformation höherer Ordnung, welche folgende Informationen über die Signale liefert: die Amplituden der $\cos(2\theta)$- und $\sin(2\theta)$-Komponenten. Hierbei bezeichnet $\theta$ (wie oben) den Winkel des Rotors 5 um die Rotorachse 6, der in der Regel durch die Winkelposition eines bestimmten bzw. markierten Rotorblatts gegeben ist.

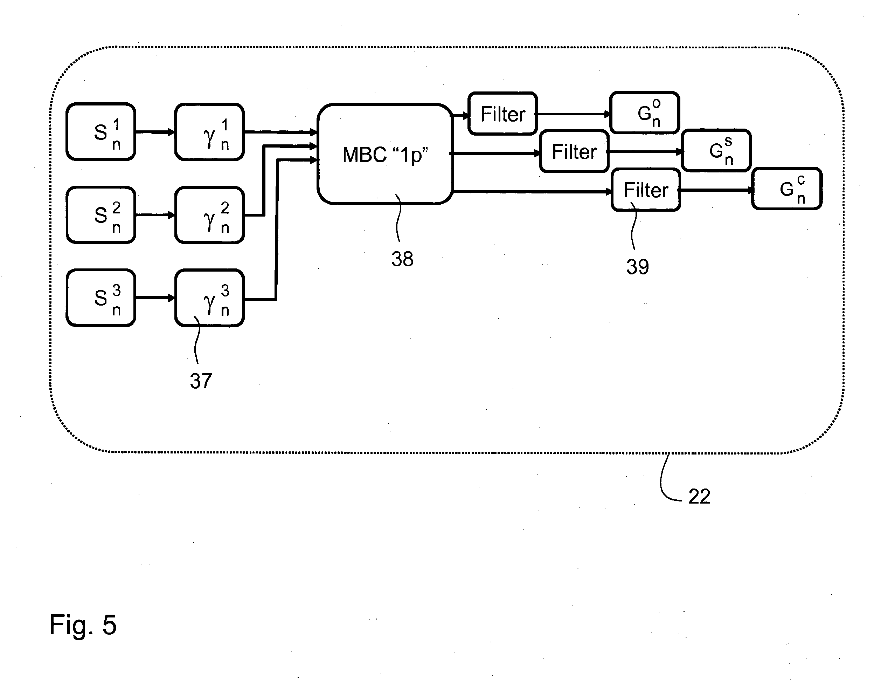

Unter Bezugnahme auf Fig. 5 ist die Basis für die 1p-Transformation und für die 2p-MBC-Transformation ein Signalsatz, der aus drei Blattsensorsignalen $\{S_n^1, S_n^2, S_n^3\}$ besteht und dadurch erhalten wird, dass an jedem Blatt dieselbe Art von physikalischer Eigenschaft gemessen wird. Die hochgestellten Ziffern 1, 2 und 3 bei $S$ bezeichnen die Blattnummer. Ferner kennzeichnet der *Index n* von $S$ die Art der Sensordaten bzw. die Art der physikalischen Eigenschaft (z.B. Biegung, Dehnung, Twist, etc.) des jeweiligen Rotorblatts, auf Basis welcher die Sensordaten ermittelt werden oder worden sind. Der Signalsatz wird wie folgt verarbeitet:

1. Jedes Blattsensorsignal $S_n^i$ durchläuft eine Einrichtung zur Verstärkungsanpassung 37 mit einer *Verstärkung* $\gamma_n^i$ und einem Offset (eine Verstärkung von eins und/oder ein Offset von null sind dabei nicht ausgeschlossen). Hierdurch ist das Blattsensorsignal im Wesentlichen zu jeder Zeit kalibriert, sodass sich ein abgestimmtes Blattsensorsignal ergibt.

2. Der aus den abgestimmten Blattsensorsignalen bestehende Signalsatz durchläuft eine 1p-MBC-Transformation 38, sodass ein stationärer Signalsatz gewonnen wird, der aus einem konstanten Signal, einem Signal für die Sinus-Amplitude und einem Signal für die Kosinus-Amplitude besteht (der stationäre Signalsatz ist vorzugsweise vergleichbar dem Signalsatz mit der Konstanten, der zyklischen Amplitude und dem Winkel $K$, $A$ bzw. $\bar{\theta}$ gemäß der oben beschriebenen, einfachen Ausgestaltung aufgebaut).

3. Aliasing-Fehler werden beseitigt, indem der stationäre Signalsatz einen Tiefpassfilter 39 durchläuft, sodass ein stationärer Signalsatz ohne Aliasing-Fehler erhalten wird. Der Tiefpassfilter 39 weist bevorzugt eine Eckfrequenz auf, die unterhalb der dreifachen Drehfrequenz des Rotors liegt.

Die resultierenden Signale werden mit $G_n^o$, $G_n^s$ und $G_n^c$ für die konstante Komponente (hochgestelltes "O"), für die Sinus-Komponente (hochgestelltes "S") und für die Kosinus-Komponente (hochgestelltes "C") bezeichnet. Bevorzugt bilden die Werte der resultierenden Signale $G_n^o$, $G_n^s$ und $G_n^c$ die wenigstens eine oder mehrere Kenngrößen des Windfelds charakterisierende Werte.

Im Allgemeinen kann eine beliebige Anzahl von Signalsätzen in der Windfeld-Estimations-Anordnung 22 verwendet werden, vorausgesetzt, dass jeder Signalsatz im mathematischen Sinne "linear unabhängig" von den anderen Signalsätzen ist. Dass heißt, dass jeder Signalsatz nicht proportional zu einer Linearkombination der anderen Signalsätze ist.

Gemäß einer Ausgestaltung werden drei Signalsätze verwendet, die aus den Blattwurzel-Biegemomenten in den blattfesten *x*-und *y*-Richtungen sowie aus dem Blattdrehmoment in der blattfesten *z*-Koordinate gebildet werden. Es wird eine standardmäßige 1p-MBC-Transformation verwendet, wobei die zur Erfassung oder Bestimmung ausgewählten Kenngrößen des Windfelds die mittlere Windgeschwindigkeit $V_m$, die Windrichtungen in der horizontalen Ebene $\chi_H$ und in der vertikalen Ebene $\chi_V$ sowie die ersten Momente in $\xi$ und $\eta$, nämlich $\psi_1$ (horizontale Windscherung) und $\phi_1$ (vertikale Windscherung) umfassen. Bevorzugt bilden die durch die Transformation gewonnenen Werte die Kenngrößen $V_m$, $\chi_H$, $\chi_V$, $\psi_1$ und $\phi_1$ des Windfelds charakterisierende Werte.

Gemäß einer anderen Ausgestaltung werden drei Signalsätze verwendet, die aus den Blattbiegungen in den blattfesten *x*-und *y*-Richtungen sowie aus dem Twist (z.B. Verwindung oder Torsion) des Blatts in der blattfesten *z*-Koordinate gebildet und an vorbestimmten Orten entlang jedes Rotorblatts gemessen werden. Es wird eine standardmäßige 1p-MBC-Transformation verwendet, wobei die zur Erfassung oder Bestimmung ausgewählten Kenngrößen des Windfelds, die mittlere Windgeschwindigkeit $V_m$, die Windrichtungen in der horizontalen Ebene $\chi_H$ und in der vertikalen Ebene $\chi_V$ sowie die ersten Momente in $\xi$ und $\eta$, nämlich $\psi_1$ (horizontale Windscherung) und $\phi_1$ (vertikale Windscherung) umfassen. Bevorzugt bilden die durch die Transformation gewonnenen Werte die Kenngrößen $V_m$, $\chi_H$, $\chi_V$, $\psi_1$ und $\phi_1$ des Windfelds charakterisierende Werte.

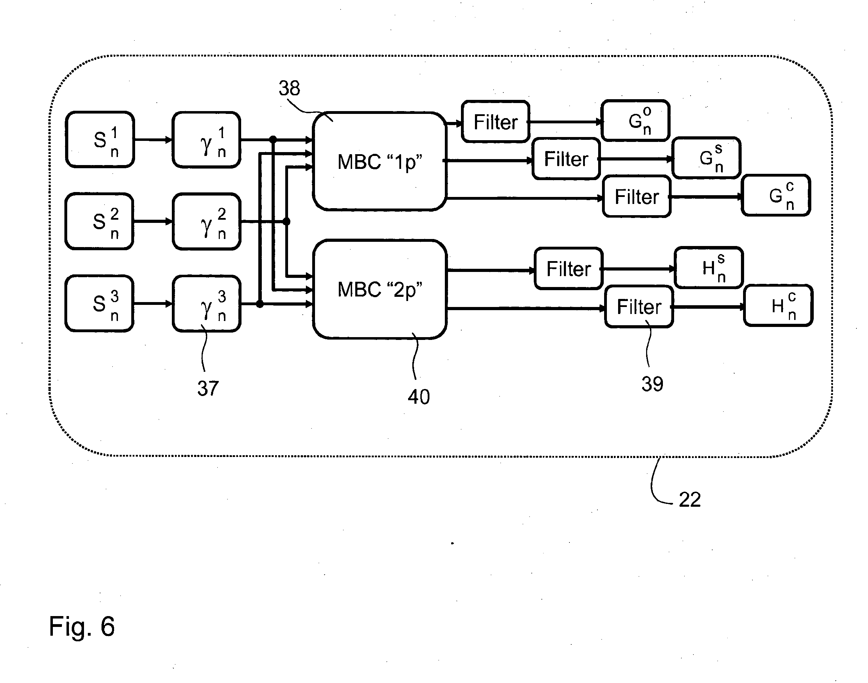

Gemäß einer weiteren Ausgestaltung der Erfindung werden drei Signalsätze verwendet, die aus den Blattbiegungen in den blattfesten *x*-, *y*- und *z*-Koordinaten gebildet werden, wobei die Blattbiegungen an vorbestimmten Orten entlang jedes Blatts gemessen werden. Gemäß Fig. 6 werden sowohl eine standardmäßige 1p-MBC-Transformation 38 als auch eine 2p-MBC-Transformation 40 höherer Ordnung verwendet, sodass ein stationärer Signalsatz ohne Aliasing-Fehler mit skalaren Werten erhalten wird. Dabei liefert die 1p-MBC-Transformation die Werte $G_n^o$, $G_n^s$ und $G_n^c$, und die 2p-MBC-Transformation liefert die Werte $H_n^s$ und $H_n^c$. Dieser Ansatz liefert somit insgesamt fünfzehn skalare Werte (fünf je Blatt) bei jeder Windbedingung. Die zur Erfassung oder Bestimmung ausgewählten Kenngrößen des Windfelds umfassen die mittlere Windgeschwindigkeit $V_m$, die Windrichtungen in der horizontalen Ebene $\chi_H$ und in der vertikalen Ebene $\chi_V$ sowie die ersten und zweiten Momente in $\xi$ und $\eta$, nämlich $\psi_1$, $\phi_1$, $\psi_2$ und $\phi_2$. Bevorzugt bilden die durch die Transformationen gewonnenen Werte $G_n^o$, $G_n^s$, $G_n^c$, $H_n^s$ und $H_n^c$ die Kenngrößen $V_m$, $\chi_H$, $\chi_V$, $\psi_1$, $\phi_1$, $\psi_2$ und $\phi_2$ des Windfelds charakterisierende Werte.

Die Windfeld-Estimations-Anordnung 22 speichert die oder die Mehrheit der Werte bzw. Daten, die zum Abschätzen der Kenngrößen des Windfelds und der mechanischen Rotorleistung erforderlich sind in einer Tabelle 31 (Windfeld-Tabelle). Zusätzliche Systeminformationen, einschließlich Korrekturen, können z.B. durch die Lösung der Steuerungsgleichungen gewonnen werden.

*L* bezeichnet einen Satz von zur Identifikation des Windfelds ausgewählten Größen, die bevorzugt Kenngrößen des Windfelds charakterisierende Werte umfassen oder bilden. Beispielsweise kann *L* die Werte *A*, *K* und $\overline{\theta}$ gemäß der einfachen Ausgestaltung der Windfeld-Estimations-Anordnung oder die Werte $G_n^o$, $G_n^s$ und $G_n^c$ gemäß der bevorzugten Ausgestaltung oder die Werte $G_n^o$, $G_n^s$, $G_n^c$, $H_n^s$ und $H_n^c$ gemäß der weiteren Ausgestaltung umfassen.

Für jeden Windfeld-Zustand, der durch die zur Erfassung oder Bestimmung ausgewählten Zustände (Kennwerte) des Windfelds spezifiziert ist, und Betriebszustand der Windkraftanlage, der durch die Rotorgeschwindigkeit $\Omega$, die Blattwinkel $\beta_i$, die Luftdichte $\rho$ und die Temperatur $\Theta_a$ spezifiziert ist, stellt die Tabelle 31 eine Beziehung zwischen den Werten $\mathcal{L}$ und wenigstens einem Wert für die mechanische Rotorleistung *T* her. Funktional ausgedrückt repräsentiert die Tabelle 31 die Funktionen

$$\mathcal{L}(V_m, \chi_H, \chi_V, \psi_1, \phi_1, \Omega, \rho, \beta_i, \theta_a)$$

und

$$T(V_m, \chi_H, \chi_V, \psi_1, \phi_1, \Omega, \rho, \beta_i, \theta_a) \ .$$

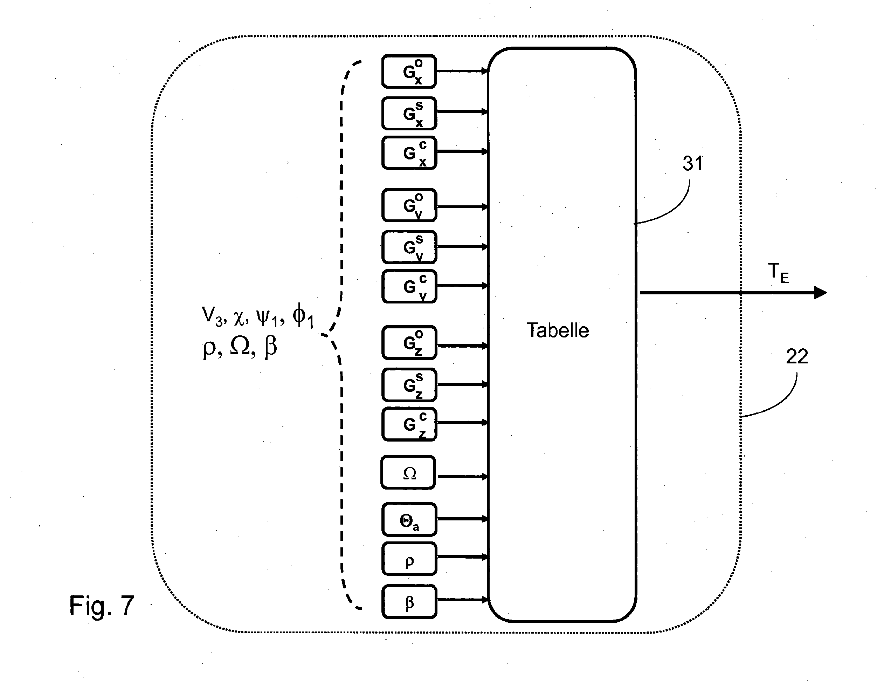

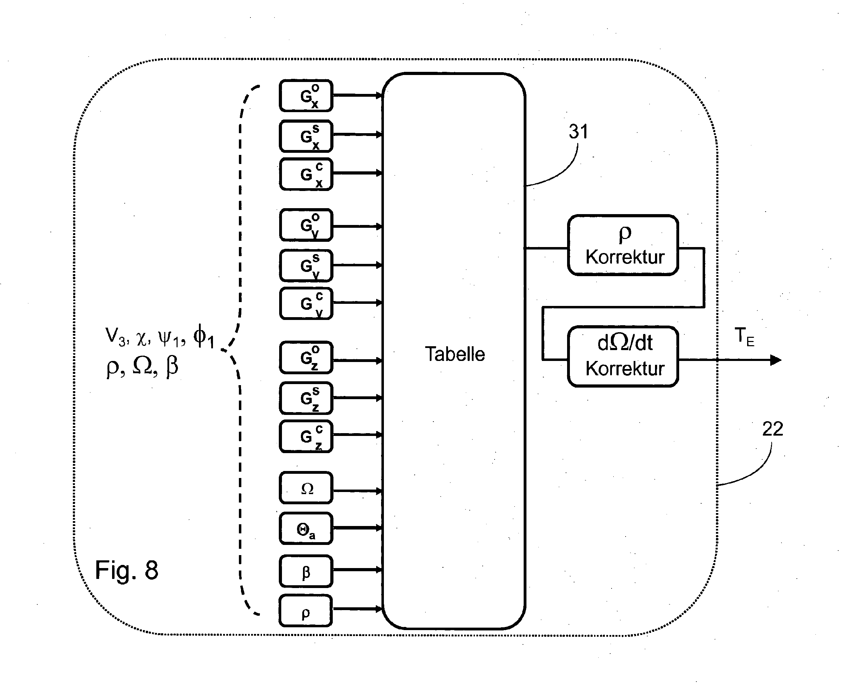

Diese funktionale Abhängigkeit ist grafisch in den Fig. 7 und 8 veranschaulicht. Der ausgewählte Satz an Windfeld-Zuständen und Betriebszuständen der Windkraftanlage ist durch zwei Faktoren bestimmt: Der erste Faktor umfasst den Wertebereich der während des Betriebs der Windkraftanlage antizipierten Werte. Der zweite Faktor umfasst den Diskretisierungsschritt, der zum Aufspannen des Wertebereichs gewählt wird oder worden ist. Der resultierende Satz an Zuständen repräsentiert ein Muster möglicher Windfeld- und Windkraftanlagen-Zustände, die durch den Windfeld-Estimator 26 auflösbar sind. Gemäß Fig. 8 erfolgt zusätzlich eine Korrektur der aus der Tabelle ermittelten Werte auf Basis der Luftdichte $\rho$ und der Rotorbeschleunigung *d$\Omega$/dt.*

Falls die Erzeugung der mechanischen Rotorleistung abhängig von zusätzlichen, messbaren Größen ist, wie z.B. dem atmosphärischen Niederschlag, wird diese Information dem Satz an Betriebszuständen der Windkraftanlage hinzugefügt.

Das Erstellen der Tabelle 31 erfolgt entweder numerisch oder durch Messungen im Windfeld. Beim numerischen Ansatz wird ein vollständiges Windkraftanlagenmodell verwendet, um das Verhalten der Windkraftanlage unter dem ausgewählten Satz an Windfeld-Zuständen und Betriebszuständen der Windkraftanlage zu simulieren. Die Werte von *L* und die mechanische Rotorleistung oder das Rotordrehmoment *T* werden berechnet und in der Tabelle 31 gespeichert.

Gemäß dem Ansatz, wonach im Windfeld gemessen wird, wird die Windkraftanlage für eine ausreichende Zeit betrieben, um den ausgewählten Satz an Windfeld-Zuständen und Betriebszuständen der Windkraftanlage zu durchlaufen. Der Betrieb der Windkraftanlage im Windfeld erfolgt in Kombination mit unabhängigen Messmitteln zum Ermitteln der Kenngrößen des Windfelds. Die Werte für *L* und die mechanische Rotorleistung oder das Rotordrehmoment *T* werden gemessen und in der Tabelle 31 gespeichert. Optional können für einen Teil der Zustände in dem ausgewählten Satz an Windfeld-Zuständen und Betriebszuständen der Windkraftanlage numerische Simulationen und für den anderen Teil Messungen im Windfeld durchgeführt werden. Ein weiterer bevorzugter Ansatz umfasst die Verwendung von Messungen im Windfeld zum Bestätigen oder Korrigieren der Tabellenwerte.

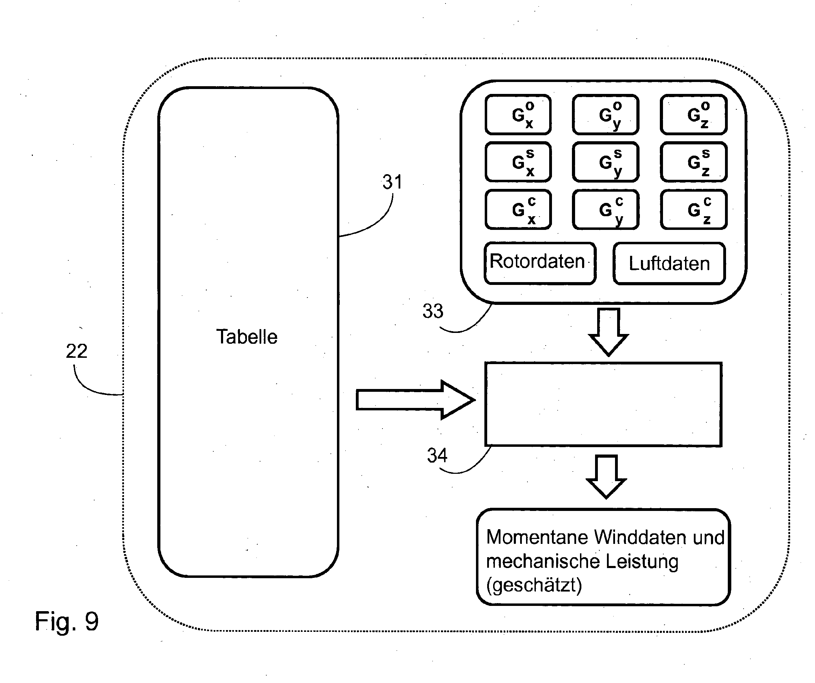

Während des normalen Betriebs der Windkraftanlage sind, wie aus Fig. 9 ersichtlich, die gemessenen Werte 33, welche die gemessenen, stationären Blattsensorsignal-Sätze ohne Aliasing-Fehler sowie die gemessenen Rotordaten und atmosphärischen Daten umfassen, einer Sucheinheit 34 zugänglich, die zusätzlich Zugriff auf die Tabelle 31 hat. Die Funktion der Sucheinheit 34 besteht darin, dass sie die gemessenen Werte 33 mit korrespondierenden Einträgen in der Tabelle 31 in Beziehung setzt. Gemäß einer Ausgestaltung verwendet die Sucheinheit 34 eine Methode der kleinsten Quadrate unter Verwendung des positiven semidefiniten Fehlers, der als Quadrat der Differenz zwischen Tabellenwerten und gemessenen Werten definiert ist. Das Minimum wird durch eine gradientenbasierte Suchmethode gefunden. Dieses mathematische Verfahren ist aus dem Stand der Technik bekannt. Gemäß einer anderen Ausgestaltung verwendet die Sucheinheit eine Suche, die zum Auffinden eines minimalen Fehlers auf binären Divisionen von Tabelleneinträgen basiert. Auch können andere aus dem Stand der Technik bekannte Algorithmen zum Auffinden von Minima von Funktionen verwendet werden.

Die zu dem von der Sucheinheit 33 gefundenen minimalen Fehler korrespondierenden Werte für die Kenngrößen des Windfelds umfassen die Werte, die von der Windfeld-Estimations-Anordnung 22 gemeldet werden und repräsentieren Schätzwerte für die in der vom Rotor überstrichenen Fläche auftretenden Kenngrößen des Windfelds und für die von dem Rotor 5 bereitgestellte mechanische Rotorleistung und können in dem Moment verwendet werden, in dem die Sucheinheit 34 die gemessenen Werte 33 mit den korrespondierenden Einträgen in der Tabelle 31 in Beziehung gesetzt hat. Die Erfindung ermöglicht somit die Ermittlung eines relativ genauen Schätzwertes für die augenblicklich zu erwartende elektrische Leistung.

Bezugszeichenliste

| | |
|---|---|
| 1 | Windkraftanlage |
| 2 | Turm |
| 3 | Gondel |
| 4 | Gierachse |
| 5 | Rotor |
| 6 | Rotorachse |
| 7 | Wind |
| 8 | Rotornabe |
| 9 | Rotorblatt |
| 10 | Rotorblatt |
| 11 | Rotorblatt |
| 12 | Blattachse |
| 13 | Blattachse |
| 14 | Blattachse. |
| 15 | Blattlager |
| 16 | Blattwinkelverstellantrieb |
| 17 | elektrischer Generator |
| 18 | Rotorwelle |
| 19 | elektrisches System |
| 20 | Steuereinheit |
| 21 | Estimations-Einheit |
| 22 | Windfeld-Estimations-Anordnung |
| 23 | Blattsensorsignale |
| 24 | Rotorsensorsignale |
| 25 | atmosphärische Signale / Luftsensorsignale |
| 26 | Leistungs-Estimator |
| 27 | Meldeeinheit |
| 28 | Datenerfassungssystem |
| 29 | Messmittel |
| 30 | Informationsleitung |
| 31 | Windfeld-Tabelle |
| 32 | Windfeld-Estimator |
| 33 | gemessene Werte / Satz an gemessenen Werten |
| 34 | Sucheinheit |
| 35 | Getriebe |
| 36 | Generatorwelle |
| 37 | Einrichtung zur Verstärkungsanpassung |
| 38 | 1p-Transformation |
| 39 | Filter |
| 40 | 2p-Transformation |
| 41 | Messmittel |
| 42 | Messmittel |
| 43 | Messmittel |
| 44 | Referenzlage |
| 45 | Rotorsensorik |
| 46 | Luftdichtesensor |
| 47 | Temperatursensor |
| 48 | Blattsensor |
| 49 | Blattsensor |
| 50 | Einrichtung zur Erfassung von Spitzen- und Mittelwert |

| | |
|---|---|
| 51 | SCADA-System |
| 52 | datenverarbeitendes System |
| 53 | Leistungstabelle |
| $\Gamma$ | Gierwinkel |
| $\theta$ | Rotorwinkel |
| $\beta$ | Blattwinkel |
| $P$ | elektrische Leistung |
| $P_E$ | Schätzwert für elektrische Leistung |
| $P_S$ | Sollwert für die elektrische Leistung |
| $T$ | mechanische Rotorleistung |
| $T_E$ | Schätzwert für mechanische Rotorleistung |
| $F$ | vom Rotor überstrichene Fläche |
| $\Omega$ | Rotationsgeschwindigkeit des Rotors |
| $d\Omega/dt$ | Rotorbeschleunigung |
| $p$ | Luftdichte |
| $\Theta_a$ | Lufttemperatur |
| $\xi$ | Koordinate des nicht-rotierenden Koordinatensystems |
| $\eta$ | Koordinate des nicht-rotierenden Koordinatensystems |
| $\zeta$ | Koordinate des nicht-rotierenden Koordinatensystems |
| $\mathbf{e}$ | Einheitsvektor in Richtung $\zeta$ |
| $\mathbf{V}_m$ | mittlere Windgeschwindigkeit |
| $t$ | Zeit |
| $\mathbf{V}(t)$ | Windgeschwindigkeit |
| $V_1$ | $\xi$-Komponente der mittleren Windgeschwindigkeit |
| $V_2$ | $\eta$-Komponente der mittleren Windgeschwindigkeit |
| $V_3$ | $\zeta$-Komponente der mittleren Windgeschwindigkeit |
| $\chi_H$ | Windrichtung in der horizontalen Ebene |
| $\chi_V$ | Windrichtung in der vertikalen Ebene |
| $\psi_1$ | erstes horizontales Moment / horizontale Windscherung |
| $\phi_1$ | erstes vertikales Moment / vertikale Windscherung |
| $\psi_2$ | zweites horizontales Moment |
| $\phi_2$ | zweites vertikales Moment |
| $D$ | Durchmesser des Rotors |
| x | Koordinate des rotierenden Koordinatensystems |
| y | Koordinate des rotierenden Koordinatensystems |
| z | Koordinate des rotierenden Koordinatensystems |
| $S$ | Blattsensorsignal |
| C | Kenngröße des Windfelds |
| $A$ | Amplitude der zyklischen Komponente des Blattsensorsignals |
| $\overline{\theta}$ | Rotorwinkel, bei dem die Amplitude $A$ auftritt |
| $K$ | konstante Komponente des Blattsensorsignals |
| $\gamma$ | Verstärkung |
| $n$ | Art der Sensordaten |
| $G_n^o$ | konstante Komponente des 1p-transformierten Signals |

$G_n^s$ Sinus-Komponente des 1p-transformierten Signals

$G_n^c$ Kosinus-Komponente des 1p-transformierten Signals

$H_n^s$ Sinus-Komponente des 2p-transformierten Signals

$H_n^c$ Kosinus-Komponente des 2p-transformierten Signals

$\mathcal{L}$ Satz von zur Identifikation des Windfelds ausgewählten Größen

**Patentansprüche**

1. Kontrolleinrichtung für eine Windkraftanlage mit einem elektrischen System (19) und einem mehrere Rotorblätter (9, 10, 11) umfassenden Rotor (5), der durch Wind (7) angetrieben wird und eine mechanische Rotorleistung (T) an das elektrische System (19) abgibt, welches diese zumindest zum Teil in eine elektrische Leistung (P) umsetzt, **gekennzeichnet durch**

   - ein wenigstens einem der Rotorblätter zugeordnetes Blattsensormittel (41), welches wenigstens eine von zumindest einer Kenngröße eines den Wind (7) am Ort des Rotors (5) beschreibenden Windfelds abhängige physikalische Eigenschaft des wenigstens einen Rotorblatts misst und zumindest ein diese wenigstens eine Eigenschaft charakterisierendes Blattsensorsignal (23) bereitstellt,
   - ein Rotorsensormittel (42), mittels welchem wenigstens eine physikalische Eigenschaft des Rotors (5) gemessen und zumindest ein diese wenigstens eine Eigenschaft des Rotors (5) charakterisierendes Rotorsensorsignal (24) bereitgestellt wird, wobei die wenigstens eine physikalische Eigenschaft des Rotors (5) den Rotorwinkel ($\theta$) des Rotors (5) umfasst,
   - eine Estimations-Einheit (21), die unter Verwendung des zumindest einen Blattsensorsignals (23) und des Rotorsensorsignals (24) einen Schätzwert ($P_E$) für die elektrische Leistung bestimmt.

2. Kontrolleinrichtung nach Anspruch 1, **dadurch gekennzeichnet, dass** die zumindest eine Kenngröße des Windfelds die Windgeschwindigkeit ($V_3$), die Windrichtung ($\chi_H, \chi_V$), die horizontale Windscherung ($\psi_1$) und/oder die vertikale Windscherung ($\phi_1$) umfasst oder charakterisiert.

3. Kontrolleinrichtung nach Anspruch 1 oder 2,

**dadurch gekennzeichnet, dass**
die Estimations-Einheit (21)

   - einen Windfeld-Estimator (32), der unter Verwendung des zumindest einen Blattsensorsignals (23) und des Rotorsensorsignals (24) einen Schätzwert ($T_E$) für die mechanische Rotorleistung bestimmt, und
   - einen Leistungs-Estimator (26) umfasst, der auf Basis des Schätzwertes ($T_E$) für die mechanische Rotorleistung den Schätzwert ($P_E$) für die elektrische Leistung bestimmt.

4. Kontrolleinrichtung nach Anspruch 3, **dadurch gekennzeichnet, dass** der Windfeld-Estimator (32) unter Verwendung des zumindest einen Blattsensorsignals (23) und des Rotorsensorsignals (24) wenigstens einen die zumindest eine Kenngröße des Windfelds charakterisierenden Wert bestimmt und auf Basis dieses wenigstens einen Wertes den Schätzwert ($T_E$) für die mechanische Rotorleistung bestimmt.

5. Kontrolleinrichtung nach Anspruch 3 oder 4, **gekennzeichnet durch**, wenigstens eine Windfeld-Tabelle (31), in der für unterschiedliche Windbedingungen die zumindest eine Kenngröße des Windfelds charakterisierende Werte ($\mathcal{L}$) und Werte zum Abschätzen der mechanischen Rotorleistung hinterlegt sind, wobei der Windfeld-Estimator (32) den Schätzwert ($T_E$) für die mechanische Rotorleistung unter Verwendung der Windfeld-Tabelle (31) bestimmt.

6. Kontrolleinrichtung nach Anspruch 5, **dadurch gekennzeichnet, dass** ein Betriebszustand der Windkraftanlage durch wenigstens eine Betriebszustandsgröße gekennzeichnet ist, welche die wenigstens eine physikalische Eigenschaft des Rotors (5) umfasst, in der Windfeld-Tabelle (31) zusätzlich für unterschiedliche Betriebszustände der Windkraftanlage Werte für die wenigstens eine Betriebszustandsgröße hinterlegt sind.

7. Kontrolleinrichtung nach einem der Ansprüche 3 bis 6, **gekennzeichnet durch** eine Leistungstabelle (53), in der für unterschiedliche Betriebsbedingungen der Windkraftanlage von der mechanischen Rotorleistung abhängige Betriebswerte und Leistungswerte zum Abschätzen der elektrischen Leistung hinterlegt sind, wobei der Leistungs-Estimator (26) den Schätzwert für die elektrische Leistung unter Verwendung der Leistungstabelle bestimmt.

**8.** Kontrolleinrichtung nach einem der vorangehenden Ansprüche,
**dadurch gekennzeichnet, dass**
das Blattsensormittel (41) wenigstens einen eine Dehnung des wenigstens einen Rotorblatts messenden Dehnungssensor (48) und/oder wenigstens einen eine Biegung des wenigstens einen Rotorblatts messenden Biegungssensor (49) umfasst, wobei der Dehnungssensor (48) und/oder der Biegungssensor (49) jeweils an zumindest einer vorbestimmten Position des wenigstens einen Rotorblatts angeordnet sind, sodass dessen wenigstens eine physikalische Eigenschaft eine Dehnung und/oder eine Biegung des wenigstens einen Rotorblatts an der oder den zumindest einen vorbestimmten Positionen umfassen.

**9.** Verfahren zum Kontrollieren des Betriebs einer Windkraftanlage (1), die ein elektrisches System (19) und einen mehrere Rotorblätter (9, 10, 11) umfassenden Rotor (5) aufweist, der durch Wind (7) angetriebenen wird und eine mechanische Rotorleistung ($T$) an das elektrische System (19) abgibt, welches diese zumindest zum Teil in eine elektrische Leistung (P) umsetzt,
**dadurch gekennzeichnet, dass**

- wenigstens eine von zumindest einer Kenngröße eines den Wind (7) am Ort des Rotors (5) beschreibenden Windfelds abhängige physikalische Eigenschaft von wenigstens einem der Rotorblätter (9, 10, 11) gemessen wird,
- wenigstens eine physikalische Eigenschaft des Rotors gemessen wird, die den Rotorwinkel ($\theta$) des Rotors (5) umfasst,
- unter Verwendung der gemessenen physikalischen Eigenschaften ein Schätzwert ($P_E$) für die elektrische Leistung ($P_E$) bestimmt wird.

**10.** Verfahren nach Anspruch 9,
**dadurch gekennzeichnet, dass**
die zumindest eine Kenngröße des Windfelds die Windgeschwindigkeit ($V_3$), die Windrichtung ($\chi_H, \chi_V$), die horizontale Windscherung ($\psi_1$) und/oder die vertikale Windscherung ($\phi_1$) umfasst oder charakterisiert.

**11.** Verfahren nach Anspruch 9 oder 10,
**dadurch gekennzeichnet, dass**
unter Verwendung der gemessenen physikalischen Eigenschaften ein Schätzwert ($T_E$) für die mechanische Rotorleistung bestimmt wird und auf Basis dieses Schätzwertes ($T_E$) der Schätzwert ($P_E$) für die elektrische Leistung bestimmt wird.

**12.** Verfahren nach Anspruch 11,
**dadurch gekennzeichnet, dass**
unter Verwendung der gemessenen physikalischen Eigenschaften wenigstens ein die zumindest eine Kenngröße des Windfelds charakterisierender Wert bestimmt wird und auf Basis dieses wenigstens einen Wertes der Schätzwert ($T_E$) für die mechanische Rotorleistung bestimmt wird.

**13.** Verfahren nach Anspruch 11 oder 12,
**dadurch gekennzeichnet, dass**
für unterschiedliche Windbedingungen die zumindest eine Kenngröße des Windfelds charakterisierende Werte ($\mathcal{L}$) und Werte zum Abschätzen der mechanischen Rotorleistung in einer Windfeld-Tabelle (31) hinterlegt werden und der Schätzwert ($T_E$) für die mechanische Rotorleistung unter Verwendung der Windfeld-Tabelle (31) bestimmt wird.

**14.** Verfahren nach Anspruch 13,
**dadurch gekennzeichnet, dass**
ein Betriebszustand der Windkraftanlage durch wenigstens eine Betriebszustandsgröße gekennzeichnet ist, welche die wenigstens eine physikalische Eigenschaft des Rotors (5) umfasst,
in der Windfeld-Tabelle (31) zusätzlich für unterschiedliche Betriebszustände der Windkraftanlage Werte für die wenigstens eine Betriebszustandsgröße hinterlegt sind.

**15.** Verfahren nach einem der Ansprüche 9 bis 14,
**dadurch gekennzeichnet, dass**

- das Messen der wenigstens einen physikalischen Eigenschaft des wenigstens einen Rotorblatts das Messen einer Dehnung und/oder einer Biegung des wenigstens einen Rotorblatts an jeweils wenigstens einer vorbestimmten Position desselben umfasst, sodass die wenigstens eine physikalische Eigenschaft des wenigstens einen Rotorblatts eine Dehnung und/oder eine Biegung des wenigstens einen Rotorblatts an der oder den wenigstens einen vorbestimmten Positionen umfasst.

**Claims**

**1.** Control device for a wind power plant having an electrical system (19) and a rotor (5) comprising several rotor blades (9, 10, 11), driven by wind (7) and giving off mechanical rotor power (T) to the electrical system (19) which converts this at least partially into electrical power (P),
**Characterized in that**

- at least one blade sensor means (41) assigned to at least one of the rotor blades which measures at least one physical property of the at least one rotor blade dependent on at least one parameter of a wind field describing the wind (7) at the location of the rotor (5) and providing at least one blade sensor signal (23) characterizing this at least one physical property,

- A rotor sensor means (42) using at least one physical property of the rotor (5) is measured and at least one rotor sensor signal (24) characterizing the minimum of one property of the rotor (5) is provided, whereby the at least one physical property of the rotor (5) comprises the rotor angle ($\theta$) of the rotor (5),

- An estimation unit (21) which using the at least one blade sensor signal (23) and the rotor sensor signal (24) determines an estimated value ($P_E$) for the electrical power.

2. Control device according to claim 1, **characterized in that** the at least one parameter of the wind field comprises or characterizes the wind speed ($V_3$), the wind direction ($\chi_H$, $\chi_V$), the horizontal wind shear ($\psi_1$) and/or the vertical wind shear ($\phi_1$).

3. Control device according to claim 1 or 2, **characterized in that** the estimation unit (21)

- A wind estimator (32) which determines an estimated value ($T_E$) for the mechanical rotor output using the at least one blade sensor signal (23) and the rotor sensor signal (24), and

- A power estimator (26) which determines the estimated value ($P_E$) for the electrical power on the basis of the estimated value ($T_E$) for the mechanical rotor power.

4. Control device according to claim 3, **characterized in that** the wind field estimator (32), using the at least one blade sensor signal (23) and the rotor sensor signal (24), determines at least one value characterizing the at least one parameter of the wind field, and on the basis of this at least one value determines the estimated value ($T_E$) for the mechanical rotor power.

5. Control device according to claim 3 or 4, **characterized by** at least one wind field table (31) into which the values ($L$) characterizing the minimum of one parameter of the wind field for different wind conditions and values for estimating the mechanical rotor power have been deposited, whereby the wind field estimator (32) determines the estimated value ($T_E$) for the mechanical rotor power using the wind field table (31).

6. Control device according to claim 5, **Characterized in that** an operating status of the wind power plant is **characterized by** at least one operating status variable which contains the at least one physical property of the rotor (5),

And that in the wind field table (31) additionally has been deposited values for the at least one operating status variable for different operating statuses of the wind power plant.

7. Control device according to claims 3 to 6, **characterized by** a power table (53) into which the operating values and power values for different operating conditions of the wind power plant dependent upon the mechanical rotor output for the purposes of estimating electrical power has been deposited, whereby the power estimator (26) determines the estimated value for the electrical power using the power table.

8. Control device according to one of the preceding claims,

**Characterized in that** the blade sensor signal (41) comprises at least one strain sensor (48) measuring a strain at least of one rotor blade and/or at least one bend sensor (49) measuring a bend at least one rotor blade, whereby the strain sensor (48) and / or bend sensor (49) sensor is arranged in at least one predetermined position of the at least one rotor blade, so that its minimum of one physical characteristic encompasses strain and/or bend at lest one rotor blade at the at lest one or more predetermined position(s).

9. Method for controlling the operation of a wind power plant (1) which has an electrical system (19) and a rotor (5) comprising several rotor blades (9, 10, 11), which is driven by wind (7) and gives off a mechanical rotor power (T) to the electrical system (19) which converts this at least partially into electrical power (P), **characterized in that**

- At least one physical property of at least one of the rotor blades (9, 10, 11) dependent on at least one parameter of a wind field describing the wind (7) at the location of the rotor (5) is measured,

- At least one physical property of the rotor is measured, which comprises the rotor angle ($\theta$) of the rotor (5),

- Using the measured physical properties, an estimated value ($P_E$) is determined for the electrical power ($P_E$).

10. Method according to claim 9, **Characterized in that** the at least one parameter of the wind field comprises or characterizes the wind speed ($V_3$), the wind direction ($\chi_H$, $\chi_V$), the horizontal wind shear ($\psi_1$) and/or the vertical wind shear ($\phi_1$).

11. Method according to claim 9 or 10, **Characterized in that**, using the measured physical properties, an estimated value ($T_E$) is determined for the mechanical rotor power, and on the basis of this estimated value ($T_E$), the estimated value ($P_E$) for the electrical power is determined.

12. Method according to claim 11,
**Characterized in that**, using the measured physical properties, at least one value characterizing the at least one parameter of the wind field is determined, and on the basis of this at least one value, the estimated value ($T_E$) is determined for the mechanical rotor power.

13. Method according to claim 11 or 12,
**Characterized in that** for different wind conditions the values ($\zeta$) characterizing at least one parameter of the wind field and values for estimation of the mechanical rotor power have been deposited in a wind field table (31) and the estimated value ($T_E$) for the mechanical rotor power is determined using the wind field table (31).

14. Method according to claim 13,
**Characterized in that** an operating status of the wind power plant is **characterized by** at least one operating status variable, which comprises the at least one physical property of the rotor (5),
In the wind field table (31) values for the at least one operating status variable are additionally stored for different operational statuses of the wind power plant.

15. Method according to claims 9 to 14,
**Characterized in that**

- measuring of the at least one physical property of the at least one rotor blade comprises the measure of a strain and/or a bend of at least one rotor blade at the respective at lest one pre-determined position of the said blade, so that the at least one physical property of the at least one rotor blade comprises a strain and/or a bend of the at least one rotor blade at the or the at least predetermined position(s).


**Revendications**

1. Dispositif de contrôle pour une éolienne avec un système électrique (19) et un rotor (5) comportant plusieurs pales de rotor (9, 10, 11), qui est entraîné par le vent (7) et cède une puissance de rotor mécanique (7) au système électrique (19) qui convertit celle-ci au moins en partie en une puissance électrique (P), **caractérisé par**

- un moyen de capteur de pale (41) attribué à au moins l'une des pales de rotor, qui mesure au moins une propriété physique de la au moins une pale de rotor dépendant d'au moins un paramètre d'un champ de vent décrivant le vent (7) à l'emplacement du rotor (5) et met à disposition au moins un signal de capteur de pale (23) caractérisant cette au moins une propriété,
- un moyen de capteur de rotor (42) à l'aide duquel au moins une propriété physique du rotor (5) est mesurée et au moins un signal de capteur de rotor (24) caractérisant cette au moins une propriété du rotor (5) est mis à disposition, au moins une propriété physique du rotor (5) comprenant l'angle ($\theta$) du rotor (5),
- une unité d'estimation (21) qui, par utilisation du au moins un signal de capteur de pale (23) et du signal de capteur de rotor (24), détermine une valeur estimative ($P_E$) pour la puissance électrique.

2. Dispositif de contrôle selon revendication 1,
**caractérisé en ce que** le au moins un paramètre du champ de vent comprend ou caractérise la vitesse du vent ($V_3$), la direction du vent ($X_H$, $X_V$), le cisaillement horizontal du vent ($\psi_1$) et/ou le cisaillement vertical du vent ($\phi_1$).

3. Dispositif de contrôle selon revendication 1 ou 2,
**caractérisé en ce que** l'unité d'estimation (21)

- comprend un estimateur de champ de vent (32) qui, par utilisation du au moins un signal de capteur de pale (23) et du signal de capteur de rotor (24), détermine une valeur estimative ($T_E$) pour la puissance de rotor mécanique, et
- comprend un estimateur de puissance (26) qui, sur la base de la valeur estimative ($T_E$) pour la puissance de rotor mécanique, détermine la valeur estimative ($P_E$) pour la puissance électrique.

4. Dispositif de contrôle selon revendication 3,
**caractérisé en ce que** l'estimateur de champ de vent (32) détermine, par utilisation du au moins un signal de capteur de pale (23) et du signal de capteur de rotor (24), au moins une valeur caractérisant le au moins un paramètre du champ de vent et détermine, sur la base de cette au moins une valeur, la valeur estimative ($T_E$) pour la puissance de rotor mécanique.

5. Dispositif de contrôle selon revendication 3 ou 4,
**caractérisé par** au moins un tableau de champs de vent (31) dans lequel sont consignées, pour différentes conditions de vent, des valeurs ($L$) caractérisant le au moins un paramètre du champ de vent et des valeurs pour l'évaluation de la puissance de rotor mécanique, l'estimateur de champ de vent (32) déterminant la valeur estimative ($T_E$) pour la puissance de rotor mécanique, par utilisation du tableau de champs de vent (31).

**6.** Dispositif de contrôle selon revendication 5, **caractérisé en ce que** un état de service de l'éolienne est **caractérisé par** au moins une grandeur d'état de service qui comprend la au moins une propriété physique du rotor (5),
dans le tableau de champs de vent (31), des valeurs pour la au moins une grandeur d'état de service sont consignées en plus pour différents états de service de l'éolienne.

**7.** Dispositif de contrôle selon l'une des revendications 3 à 6,
**caractérisé par** un tableau de puissance (53) dans lequel sont consignées, pour différentes conditions de service de l'éolienne, des valeurs de service dépendant de la puissance de rotor mécanique et des valeurs de puissance pour l'évaluation de la puissance électrique, l'estimateur de puissance (26) déterminant la valeur estimative pour la puissance électrique, par utilisation du tableau de puissance.

**8.** Dispositif de contrôle selon l'une des précédentes revendications,
**caractérisé en ce que** le moyen de capteur de pale (41) comprend au moins un capteur d'allongement (48) mesurant un allongement de la au moins une pale de rotor et/ou au moins un capteur de flexion (49) mesurant une flexion de la au moins une pale de rotor, le capteur d'allongement (48) et/ou le capteur de flexion (49) étant chacun disposés en au moins une position prédéterminée de la au moins une pale de rotor, ce qui fait que la au moins une propriété physique de celle-ci comprend un allongement et/ou une flexion de la au moins une pale de rotor dans la ou les au moins une positions prédéterminées.

**9.** Procédé pour contrôler le fonctionnement d'une éolienne (1) qui présente un système électrique (19) et un rotor (5) comprenant plusieurs pales de rotor (9, 10, 11), qui est entraîné par le vent (7) et cède une puissance de rotor mécanique (7) au système électrique (19) qui convertit celle-ci au moins en partie en une puissance électrique (P),
**caractérisé en ce que**

- au moins une propriété physique d'au moins l'une des pales de rotor (9, 10, 11) dépendant d'un champ de vent décrivant le vent (7) à l'emplacement du rotor (5) est mesurée,
- au moins une propriété physique du rotor qui comprend l'angle ($\theta$) du rotor (5) est mesurée,
- par utilisation des propriétés physiques mesurées, une valeur estimative ($P_E$) pour la puissance électrique ($P_E$) est déterminée.

**10.** Procédé selon revendication 9,
**caractérisé en ce que** le au moins un paramètre du champ de vent comprend ou caractérise la vitesse du vent ($V_3$), la direction du vent ($X_H$, $X_V$), le cisaillement horizontal du vent ($\psi 1$) et/ou le cisaillement vertical du vent ($\phi_1$).

**11.** Procédé selon revendication 9 ou 10,
**caractérisé en ce que**, par utilisation des propriétés physiques mesurées, une valeur estimative ($T_E$) pour la puissance de rotor mécanique est déterminée et, sur la base de cette valeur estimative ($T_E$), la valeur estimative ($P_E$) pour la puissance électrique est déterminée.

**12.** Procédé selon revendication 11,
**caractérisé en ce que**, par utilisation des propriétés physiques mesurées, au moins une valeur caractérisant un paramètre du champ de vent est déterminée et, sur la base de cette au moins une valeur, la valeur estimative ($T_E$) pour la puissance de rotor mécanique est déterminée.

**13.** Procédé selon revendication 11 ou 12,
**caractérisé en ce que**, pour différentes conditions de vent, des valeurs ($L$) caractérisant le au moins un paramètre du champ de vent et des valeurs pour l'évaluation de la puissance de rotor mécanique sont consignées dans un tableau de champs de vent (31) et la valeur estimative ($T_E$) pour la puissance de rotor mécanique est déterminée par utilisation du tableau de champs de vent (31).

**14.** Procédé selon revendication 13,
**caractérisé en ce que** un état de service de l'éolienne est identifié par au moins une grandeur d'état de service qui comprend la au moins une propriété physique du rotor (5),
dans le tableau de champs de vent (31), des valeurs pour la au moins une grandeur d'état de service sont consignées en plus pour différents états de service de l'éolienne.

**15.** Procédé selon l'une des revendications 9 à 14,
**caractérisé en ce que**

- la mesure de la au moins une propriété physique de la au moins une pale de rotor comprend la mesure d'un allongement et/ou d'une flexion de la au moins une pale de rotor dans respectivement au moins une position prédéterminée de celle-ci, ce qui fait que la au moins une propriété physique de la au moins une pale de rotor comprend un allongement et/ou une flexion de la au moins une pale de rotor dans la ou les au moins une positions prédéterminées.

Fig. 1

Fig. 2

Fig. 3

Fig. 4

Fig. 5

Fig. 6

Fig. 7

Fig. 8

EP 2 553 263 B1

Fig. 9

**IN DER BESCHREIBUNG AUFGEFÜHRTE DOKUMENTE**

**In der Beschreibung aufgeführte Patentdokumente**

- EP 09013565 A
- US 6320272 B
- DE 102007026176 A1